Europäisches Patentamt

European Patent Office

Office européen des brevets

(19)

(11) Publication number: 0 328 885
A2

(12) **EUROPEAN PATENT APPLICATION**

(21) Application number: 89100790.8

(51) Int. Cl.4: G01D 4/00

(22) Date of filing: 18.01.89

Unreadable parts of the originally filled application documents have been excluded from the publication. These parts have been marked with *.

The title of the invention has been amended (Guidelines for Examination in the EPO, A-III, 7.3).

(30) Priority: 18.01.88 PL 270196
21.03.88 PL 271327
13.06.88 PL 273052

(43) Date of publication of application:
23.08.89 Bulletin 89/34

(84) Designated Contracting States:
AT BE CH DE ES FR GB GR IT LI LU NL SE

(71) Applicant: Rajgrodzki, Jerzy
ul. Zelazna 58/62 m.821
oo-866 Warszawa(PL)

Applicant: Sosinski, Jacek
ul. Mickiewicza 27m.28
01-562 Warszawa(PL)

Applicant: Dynowski, Roman
ul. Platynowa 8m 102
00-808 Warszawa(PL)

(72) Inventor: Rajgrodzki, Jerzy
ul. Zelazna 58/62 m.821
oo-866 Warszawa(PL)
Inventor: Sosinski, Jacek
ul. Mickiewicza 27m.28
01-562 Warszawa(PL)
Inventor: Dynowski, Roman
ul. Platynowa 8m 102
00-808 Warszawa(PL)

(74) Representative: Lehn, Werner, Dipl.-Ing. et al
Hoffmann, Eitle & Partner Patentanwälte
Arabellastrasse 4
D-8000 München 81(DE)

(54) **Method and device for energy and water measurement.**

(57) Method of energy media and water quantity measurement, especially in dwellings, and a multifunction measuring system with its single-function or more-than-one-function varieties so as to practically apply the method, include the measurements of quantities: heat from the central heating system, warm and cold water from water supplying system, natural gas from gas indoor installation and electric energy from indoor wiring system. One functionally integrated unit is designed for one apartment only. The unit is connected to respective measuring sensors in the supplying systems within the apartment. According to the invention, the measurements are continuously carried out, in-line and in real time, while the media are used in the apartment. Media can be measured each one separately. Due to the use of microprocessor and other well known techniques such as ultrasonic and vortex flowmetering in the design of the metering multifunction unit based on the method according to the invention, the metering units are suitable for any existing or newly built apartments with no necessity to change or restrict the hitherto usable functions of the dwelling and its internal equipment. The proposal according to the invention has resulted in more precise measurement, lower material and energy consumption index and significant drop in unit prices.

The flexible electric conductors link the multifunction unit to the sensors in media supplying systems within

the apartment. They are properly protected against any abuse, any disturbances, etc. The sensor designs are specially adapted to housing environment and are much simpler and cheaper than their industrial counterparts.

Fig. 1

# Method of energy media and water quantity measurement, especially in dwellings, and a multifunction measuring system for application of the method

The invention is referred to a method of energy media and water quantity measurement, especially in separate dwellings or similar accommodations in apartment buildings and the like, if the energy media and water are supplied to apartment sanitary fittings or receivers by means of indoor systems of an apartment building from a central source of heat, water, gas and electric energy. Besides, the subject matter of the invention includes a multifunction measuring system and its single- or more-than-one-function varieties so as to practically apply the method in any situation to be met in housing needs.

Hitherto, separate individual meters are employed for each kind of energy media and warm or cold water in housing: Separate gas-meter electricity meters, water meters for warm or cold water, and recently also various simplified or complete thermal energy motors. However, if all the meters were to simultaneously be installed and used in a single apartment because the apartment is actually provided with all the energy media and water, then such a task would become practically impossible. This is because of economical, organizational and/or technical reasons when the prior art measuring devices would have to be together installed and used in millions of such apartments of the existing housing as well as in the new apartment buildings to be built yet in the years to come. Although there are cases when in some situations the difficulties can be overcome but then the task is rather expensive and such a solution cannot be commonly available. The various prior art techniques for measuring energy media and water quantities show also many other deficiencies involved with the single-function measuring devices that also include such aspects as high material and energy consumption indices, costly and very complicated managing and service system under normal operating conditions because of various techniques and different technologies incorporated into millions of the prior art measuring units to be used all over the country, great professional differentiation among large number of specialists employed in production, technical service and management, as well as the fact that such prior art proposals are not acceptable to anyone, and especially to the would-be user of existing apartment.

These and other problems of the prior art techniques can be greatly alleviated or eliminated in accordance with the present invention.

The quantities of energy media and water as used in one apartment are measured only by one functionally integrated multifunctio measuring unit connected to measuring sensors. The measuring programme of the unit includes measurements of all the media according to received measuring signals that represent respective electric and non-electric physical quantities to be calculated and displayed so as to be paid by the apartment user it agreed time to the suppliers of energy media and water. Standard measuring signals from various physical quantities in the apartment, collec ted, converted and calculated by the multifunction measuring unit, form the technical uniformity of the measuring and display system according to the invention. The use of sensors in accordance with this invention makes it possible in the apartment to avoid the hitherto necessity of employing the prior art meters such as the simplified or complete thermal energy meter, water meter, gas-meter or electricity meter if the sensors are connected to the multifunction measuring unit. In case of an existing or newly projected multi-apartment building and a housing estate of a number of separate single-apartment houses provided with a central supply of energy media and water, the multi-function measuring units constitut a general system of measurements for separate apartments and the multi-apartment building or the housing estate, i.e. there is apartment level and multi-apartment building level of measurements. The complete system of measurements in a building according to this invention, irrespective of the number of apartment multifunction measuring units, includes a main multifuntion measuring unit that assumes the role of reference measurement to which the measuring results of apartment measuring units can be referred. The main reference measuring unit can be placed in a suitable accommodation of the apartment building. It must meet all the standard requirements as determined by the respective national metrological regulations based on legal and quality metrology, an official certification for the main unit must be obtained from authorities. The calculation of dues and accounting for energy media and water as received by the whole building are based upon the readings of the main multifunction measuring unit but the individual participation of each single apartment in the building general consumption of one kind of energy medium or water is referred to a result of proper calculation based upon the readings of a display of apartment multifunction unit that shows the actual consumption of that respective energy medium or water in the apartment in question. The system of measurements keeps up a precise correspondence between one kind of measuring function of the main reference unit and the same kind of measuring function of each individual apartment multifunction measuring unit all the time within a period of usual inspection

The method in accordance with this invention can be best and most comprehensibly described if referred to the example of thermal energy measuring function of the system. The other measuring functions are also based upon the method but to a different system that is presented further in this specification.

In case of central heating the above mentioned participation principle and the quantity of thermal energy in one separate apartment,as received from heating elements, can be illustrated by the formula as follows,

$$Q_{u1} = \frac{N_1 \cdot k_1}{\sum_1^n (x_n \cdot k_n)} \cdot Q_o \qquad /1/$$

where: $N_1$ number of kelvin-hours within a period of usual inspection summed up and displayed on the apartment multifunction measuring unit, i.e. display reading for thermal energy measuring function according to this invention; $k_1, k_n$ constant empirical factors that each corresponds to an appropriate apartment out of total number of n apartments of the building; among other physical aspect they comprise also type of apartment, building characteristics, actually existing can determined conditions of thermal energy consumption, thermal stability, number of measuring sensors of air temperature in the apartment as well as other permanent components of thermal structural system that can have any significant meaning to the task of determining the system measuring accuracy, the components being established in a project of the measuring system according to this invention; $N_n$, same as $N_1$, but in n-th apartment of the building; $Q_o$ quantity of thermal energy in kJ, in being measured within the period of usual inspection, the period being the same as for each apartment from $N_1$ to $N_n$ but showing the total quantity consumed by the whole building as indicated by the display counter of the reference main multifunction measuring unit for its thermal energy measuring function.

The quantity of thermal energy consumed in an apartment is substantially proportional to the product of air-temperature and period of time when the values of temperature were measured but other factors that decide about the actual heat quantity received from the heating elements of central heating were not changed within the period of usual inspection.

Thermal states inside the apartment depend on heat balance due to heat supply and losses through building partitions, actual operating capacity of heating elements of central heating, ventilation or air-conditioning, thermal properties of building partitions and thermal characteristics of the equipment in apartment. The validity of the proposition that the number of kelvin-hours of apartment air temperature is proportional to the actual real quantity of heat received in the apartment while the internal air temperature is being measured with thermometric sensors during the whole period of central heating operation is based on the fact that changes of mean air-temperature in the apartment decisively inform about the actual differencies in operating conditions among particular apartments in building in respect to the factual use of heat quantity of analog supplied from the central heating system to the apartment and measured by the apartment multifunction measuring unit. There are permanent relations in quantities of various physical factors of an apartment building and they decisively influence the actual level of heat losses of the building, e.g. permanent components or building construction that belong to the thermal system of the whole building and separate apartments, such as cubage resulting from the factual square meters and height of apartments, number of windows, doors and any building openings and their dimensions, external thermal insulation, etc. A proper analytical approach so as to identify those physical factors is assumed as a basis of calculation in order to find out the appropriate value of empirical factor that is characteristic for a given ┅┅┅ of apartment within an apartment building. As it was mentioned above, those empirical factors are designated as $k_1,...,k_n$ and are calculated as well as subsequently systematically improved in accordance with collected experience and known measuring methods based upon the technical methodology of thermal engineering and other relevant sources of knowledge. The method of project preparation of measuring system will be elaborated by specialized contractors and then such a method can reproducibly be used in practice.

As above mentioned, the method in accordance with the invention can also be used for measurements of other energy media and water; also then the main reference multifunction measuring unit and the apartment multifunction measuring units cooperate with the use of the same principle as described for the thermal energy measuring function.

4

The electronic design of both kinds of measuring units provides the possibility of automatic transmission of collected, converted and calculated measuring data to a central minicomputer that can be for one building only or for a whole housing estate of different apartment buildings. The minicomputer can make all the accounting tasks and print bills. The signals that carry data can be transmitted through indoor and/or outdoor telephone cables if each apartment is connected to a telephone network. An alternative engineering solution in accordance with this invention is the use of indoor electric installation system for data transmission so as to employ separate conductors for sending measuring signals from apartments to the central minicomputer. Besides such an electric system can be a means for supplying electric power from a central independent power source to each apartment multifunction measuring unit.

Particular examples of the method and devices in accordance with this invention will now be described with reference to the accompanying drawings; in which:-

Fig.1 is a structural flow chart of the apartment multifunction measuring unit;

Fig.2 is a simplified structural flow chart of the reference multifunction measuring unit of the apartment building;

Fig.3 is a front panel of the apartment multifunction measuring unit showing a general arrangement of controls, displays and other groups of components of the unit;

Fig.4 is a block diagram of the method for temperature measurements of air indoor temperature so as to count up kelvin-hours by means of the apartment multifunction measuring unit and measure the thermal energy with its thermal energy measuring function, the block diagram showing all the physical quantities classified as measuring or control ones in accordance with the purpose of this invention;

Fig.5 is functional diagram of operations and conditions upon which is based the algorithm of measuring, control, switching and counting steps that correspond to the basic thermal states as specified in Table 1;

Fig.6 is a modification of the apartment multifunction measuring unit so as to measure only kelvin-hours as a separate thermal energy measuring unit within the building system of measurements in accordance with this invention;

Fig.7 is a block diagram of the method for measurements of water quantity and the thermal energy quantity contained in warm water supplied by central water system to apartments in the building;

Fig.8 is a functional diagram of operations and conditions upon which is based the algorithm of measuring, control, switching, and counting steps;

Fig.9 is a modification of the apartment multifunction measuring unit so as to measure only water quantity and its thermal energy content, the modification being in fact a water meter with its thermometric measuring function in apartment applications according to this invention.

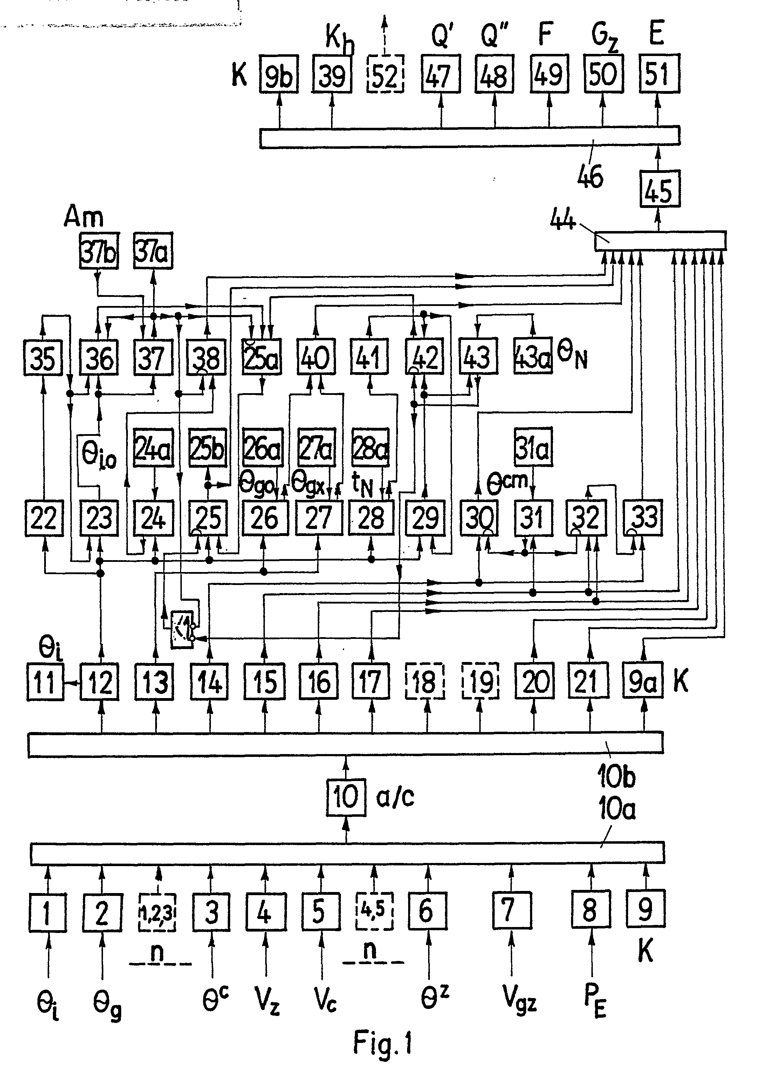

Fig. 1 shows measuring sensors connected to analogue signal switching stage 10a; they have their output analogue signals within a standard range of signal values. Thermometric sensor 1 gives the temperature value $\theta_1$ of the apartment inner air of apartment interior space heated up by the central heating elements; thermometric sensor 2 measures the return water temperature $\theta_g$ of a heater connected in the apartment to central heating system of the building; thermometric sensor 3 measures warm water temperature and is a means for technical implementation of the thermometric function of the multifunction measuring unit for water quantity measurements so as to determine the thermal energy content in the measured volume of warm water as received in the apartment. The number of sensors 1,2,3 is according to an actual need which is symbolically shown in fig.1. The number of sensors 1,2,3 depends on apartment size, number of heating elements, number of independent branches from central heating risers or warm and cold water plumb-lines. Sensor 4 measures volumetric cold water flow and sensor 5 measures volumetric warm water flow; same as above, any number of sensors 4,5 can be employed , which is symbolically shown in fig.1. Thermometric sensor 6 measures cold water temperature; it is placed on any one of cold water piping branches in the apartmen The water-metering function that includes thermometric measurement refers its readings to that sensor so as to calculate thermal energy quantities $Q'$ and $Q''$ as contained in the warm water used in the apartment. Instead of using sensor 6, the measuring system can be provided with an adjustment means so as to set up a constant reference value of temperature and thus determine heat quantities $Q'$ or $Q''$, respectively. Sensor 7 measures volumetric gas flow, $v_{gz}$, as received from the building gas system. Sensor 8 measures electric power so as to determine the quantity of electric energy actually used in the apartment within the period of usual inspection. Besides switching stage 10a receives signals from transmitter 9 of the measuring unit self-checking system so as to detect errors in switching stages of the unit. A clock system sets up the operation of measuring unit in accordance with a timing programme; not shown in fig.1. Switching stage 10a receives and switches analog signals so as to input them into analog-to-digital converter 10; its output is linked to digital signal switching stage 10b. According

5

to a programme, the digital signals are supplied to particular digital buffers, buffer12 of measuring data for $\theta_1$ and buffer 13 of measuring data for $\theta_g$, buffer 14 of measuring data for warm water quantity $v_o$ and buffer 15 of measuring data for warm water temperature $\theta^c$, buffer 16 of measuring data for cold water temperature $\theta^z$ and buffer 17 of measuring data for cold water quantity $v_z$; symbolically shown buffers 18,19 determine thermometric functions or flowmetering functions as implemented with measuring sensors that are connected to switching stage 10a, i.e. either having measuring functions 1,2,3 or measuring functions 4,5. Besides, buffer 20 keeps up the measuring data of gas quantity $v_{gz}$ and buffer 21 contains data of electric power $P_F$ Buffer 9a receives monitoring signals from transmitter 9. Measuring data of buffer 12 are shown in real time; they can be read from liquid crystal display 11 as a digital reading of $\theta_i$, the value coming from one selected thermoemetric sensor or it can be mean temperature value of $\theta_i$ based on the measuring data from all the actually operating thermometric sensors of $\theta_i$ in the apartment. The latter case is possible if the system in accordance with this invention is provided with an averaging circuit of those signals. Besides, buffer 12 connects to gating circuit 22, arithmetic unit 23 that subtracts preceding measured value of $\theta_i$ from actual value, comparator circuit 24 that compares if $\theta_i$ at the measuring moment is higher than $\theta_{io}$ which is minimum set value of $\theta_i$, the minimum $\theta_i$ being set with adjusting means 24a, switching circuit 25, gating circuit 28, being connected to adjusting means 28a for setting up time period $t_N$ so as to periodically open the gate, and connects to arithmetic unit 29 that subtracts last gated value of $\theta_i$ from actually measured one. Buffer 13 connects to comparator circuit 26 which compares the return water temperature $\theta_g$ at the moment of measurement so as to determine if its value is lower than $\theta_{go}$; adjusting means 26a sets up the required value of $\theta_{go}$. It is the minimum value of $\theta_g$; below this value counting of kelvin-hours ceases. Also buffer 13 connects to comparator circuit 27 which compares the return water temperature $\theta_g$ so as to determine if its value is higher than $\theta_{gx}$; adjusting means 27a sets up the required value $\theta_{gx}$. It is the maximum value of $\theta_g$; above this value counting of kelvin-hours ceases. Buffer 14 connects to circuit 30 which switches the volumetric measuring operation for warm water flow on, and also connects to circuit 33 which switches the volumetric measuring speration of warm water flow on, if $\theta^c$ is lower than $\theta^{cm}$, permissible minimum temperature of that water flow; adjusting means 31a sets up the required value of $\theta^{cm}$. Buffer 15 connects to circuits 31,32,44. Buffer 16 connects to circuits 32,44. Buffer 17 connects to switching stage 44. Switching stage 44 selects the actually measured medium so as to give a proper count.

Buffer 20 and buffer 21 are linked to switching stage 44; buffer 9a has also such a direct connection to switching stage 44. Gating circuit 22 has its output connected to buffer 35 that stores the preceding temperature value, the output of buffer 35 being linked to inputs of 23 and 36. Circuit 23 has an arithmetic function; it subtracts preceding temperature value $\theta_i$ from the actually measured one; circuit 36 is also an arithmetic unit that adds temperature values $\theta_i$ from preceding measurements to calculated temperature difference $\theta_i$. The output of circuit 23 connects to input of circuit 36, and besides to input of circuit 37 that compares if the calculated temperature difference $\theta_i$ exceeds the value as set up with adjusting means 37b, and designated as $A_m$, which corresponds to the state of minimum ventilating of the apartment as specified in Table 1. The output of circuit 37 is a control signal supplied to circuit 36 and to inputs of switching circuit 25 and circuit 38 that sends its blocking signal so as to block the operation of adding circuit for measured values. From circuit 37 the control signal is supplied to circuit 25 through inverted input of OR-circuit. Besides, output signal of circuit 37 connects to display 37a that is of red colour and shows the actual ventilating state when increased thermal losses should be summed up, and counting switched on by means of the summary signal to be explained here later.

Circuit 36 connects to switching circuit 25a. The mentioned output signal from circuit 37 is also sent out to the input of switching circuit 25a but third input of switching circuit 25a is supplied from circuit 42 which is an arithmetic circuit for adding value $\theta_i$ from preceding gated measurement to the value as calculate in arithmetic circuit. Switching circuit 25a connects to the input of switching circuit 25 and the output of switching circuit 25 goes to green display 25b that shows the stationary state according to specification in Table 1; it means normal thermal losses with no summary signal of measurements of temperature $\theta_i$. Besides, switching circuit 25 directly connects to switching stage 44. Comparator circuit 24 connects to the input of circuit 38 which sends out its output to switching stage 44; it is in order to disable the counting up of measured values, if it is actually needed. The second input of OR-circuit receives signal from circuit 43; this signal is inverted at the input of OR-circuit. Circuit 26 connects to circuit 40 that gives a product of signals, and its second input is from circuit 27. The output product signal of circuit 40 is supplied to switching stage 44. Gating circuit 28 connects to buffer 41 that stores the value of $\theta_i$ measured at the moment when is timing pulse that corresponds to period $t_N$ to be adjusted with adjusting means 28a. Buffer 41 connects to circuit 42 and circuit 29, an arithmetic circuit mentioned above. Circuit 29 connects to circuit 42 and circuit 43; circuit 43 compares if the actual difference of values $\theta_i$ as detected at small static thermal loss, i.e. having very small dynamical drop of value, is lower than $\theta_N$ set by means 43a. Circuit 31 that compares if warm water temperature $\theta^c$ is higher than the minimum permissible temperature $\theta_{cm}$ agreed upon in an agreement for the delivery of warm water connects to circuit 30 and circuit 32 circuit 32 compares if there is any difference between $\theta^c$ and $\theta^z$ and its two other inputs receive signals from buffer 16 of $\theta^z$ and buffer 15 of $\theta^c$, respectively. Buffer 15 supplies measuring data to circuit 31 as well. The minimum value of $\theta^c$, namely $\theta^{cm}$, is not by adjusting means 31a. Switching stage 44 receives its input signals from 17,20, 21,25,30,33,38,40,9z.

Switching stage 44 connects to adding and calculating circuit 45 which in turn connects to circuit 46 that switches so as to use an appropriate type of counter; the switching stage 46 connects to counter 39 for counting kelvin-hours of $\theta_i$, to counter 47 for thermal units of heat in warm water of temperature $\theta^c$, counter 48 for thermal units of heat in warm water but having lower temperature than $\theta^{cm}$, to counter 49 for total water quantity F, counter 50 for gas quantity Gz, counter 51 for quantity of electric energy E, and connects to monitoring circuit 9b with visible meassage that shows normal or defective operation of the apartment multifunction measuring unit. Circuit 52 is an interface for measuring data transmission from circuits 45,46 to minicomputer in building or to a computer of housing estate by means of a local area network.

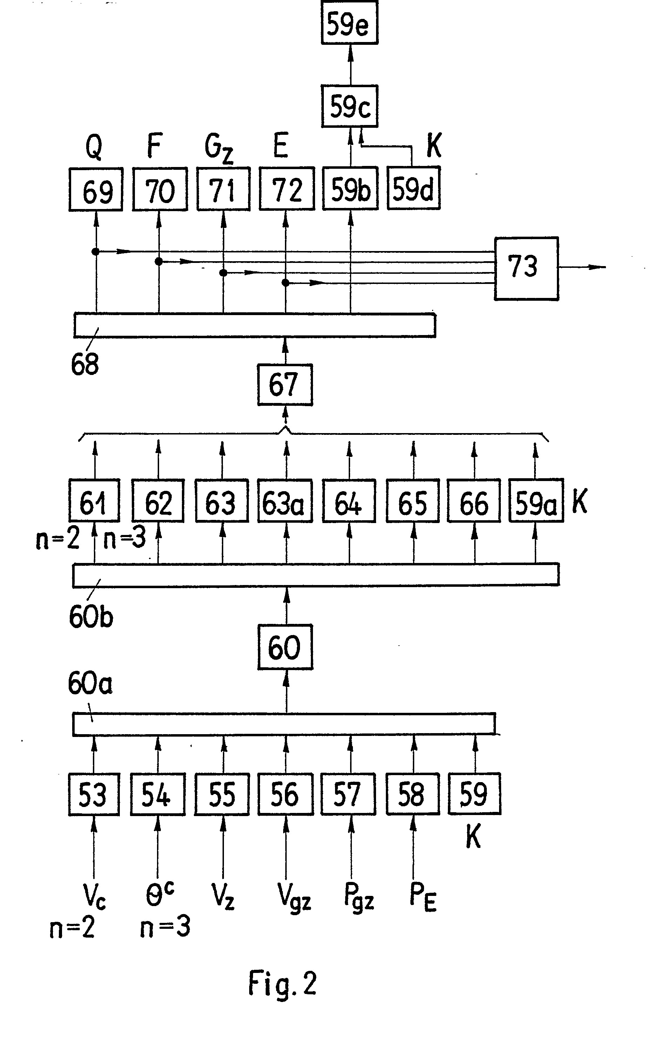

Fig.2 shows a group of measuring sensors connected to switching stage 60a which receives analog measuring signals from those sensors. Ultrasonic measuring sensor 53, or of any other useful type, measures volumetric flow of high pressure heating water; however, for example, two such sensors can be employed, one at the receiving point of water return to outdoor thermal network and one at the point of water outgoing from heat exchanger of the central heating system in the building. The thermometric sensors 54 correspond to those two volumetric flow measuring sensors and one of sensors 54 is placed in the supplying pipeline of building heat distribution centre and the other one at the place directly in pipe connection to the thermal network of heating return water from heat exchanger of the central heating system, and adjacent to volumetric flow sensor 53. Thus the thermal energy quantity is measured as supplied to building system from outdoor high pressure water network for the systems of central heating, warm water or other heat receivers and being the total quantity of thermal energy received from the outdoor network and used by the building thermal systems; if there are any other thermal receivers than the heat exchangers of warm water and central heating systems, they will be measured with separate flow and thermometric sensors connected to switching stage 60a the same way as above. If they are not present, then the heat quantity necessary to heat up cold water so as to obtain the required temperature of warm water is calculated in the multifunction reference system as the heat quantity difference of the thermal energy received from the outdoor network and the thermal energy received by the central heating system of the building. Sensors 55,56 are designed for measurements of cold water volumetric flow $v_z$ and gas volumetric flow $v_{gz}$, received from outdoor gas network. Sensor 58 is a three-phase electric power measuring converter so as to measure the electric power of building electric system or it can be a single-phase electric power converter in case of a small building, $P_E$.

Transmitter 59 of self-checking monitoring system of the measuring unit connects its analog signals to switching stage 60a. Switching stage 60a connects to analog-to-digital converter 60, and the latter connects to switching stage 60b. Timing clock, not shown, determine all the operations of the reference multifunction measuring unit. Buffers 61,62,63,64,66,59a connect to calculating circuit 67 on their output side and to switch stage 60b on their input side. Buffers 61 store measuring data of volumetric heating water flow as supplied from sensors 53, buffers 62 store measuring data of thermometric measurements from sensors 54 so as to determine and calculate the heat quantities received by the building warm water system and central heating system; calculating operations are correspondingly carried out by calculating circuit 67 in accordance with known physical and mathematical relationships. Buffer 63 receives data from sensor 55 designed for measuring cold water flow $v_z$ as used by the building. Buffer 63a symbolically shows a possible structural reserve in the measuring system. Buffer 64 stores measuring data of volumetric gas flow and buffer 65 stores measuring data from gas-pressure measuring sensor 57, $p_{gz}$, so as to ensure corrections and receive gas measuring results in standard cubic meters. Buffer 66 stores measuring data of single- or three-phase electric power and transmits it for electric energy calculations. Buffer 59a receives digital signals after conversion from analog monitoring transmitter 59.

Calculating circuit 67 connects to switching stage 68 designed for switching the calculated quantities: the latter connects to counters 69,70,71,72 as well as to monitoring circuits 59b,59c, 59d,59e. Output signals of switching circuit 68 carry calculated measuring data that also can be transmitted by means of an interface and communication line to a central minicomputer. Counter 69 is designed for displaying heat quantities, $Q_c$ for building central heating system or $Q_{cw}$ for warm water system, or both. Counters 70,71,72 display quantities of cold water F, gas Gz and electricity E as received by the building, respectively. The self shielding monitoring system includes indicator 59b to show the actual state of the multifunction

7

measuring unit, monitoring circuit 59c for received signal from transmitter 59 and from buffer 59a, circuit 50a for standard of simulating signal and indicator 59c that displays defective operation of the multifunction measuring unit. Measuring data are transmitted through the interface system 73 to, for example, a local area network.

The number of counters can be different from that shown in fig.2 It will depend on actual needs in a concrete case, for example, when heat for building ventilation is to be measured or the principle of placing measuring sensors in pipeline lay-out of the building heat distribution centre is changed. Any number of sensors can be connected to switching stage 60a and any scope of calculations can be carried out within the system of reference multifunction measuring unit so as to obtain the calculated quantities and display on counters.

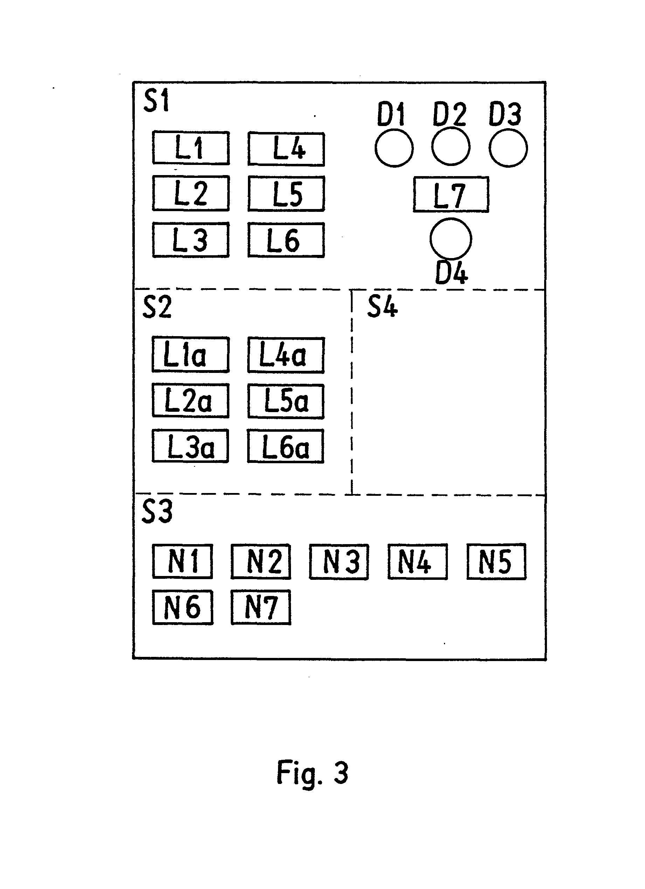

Fig.3 shows an arrangement of reading, signalling and adjusting elements. The sectionalization of front panel and interior of the housing of apartment multifunction measuring unit into preferred functional sections is also shown. Section S1 includes displays L1,L2,L3,L4,L5,L6,L7, for example, made of liquid crystals and light-emitting diodes D1,D2,D3,D4. L1 is for displaying kelvin-hours, Kh; L2 - quantity of cold and warm water in cubic meters, "F'" L3 - thermal units by convention, if water temperature is higher than $\theta^{cm}$ , "Q'" ; L4 - thermal units by convention, if water temperature is lower than $\theta^{cm}$, "Q''"; L5 - gas volumetric units by convention to be corrected so as to receive display in standard cubic meters, the corrections from gas pressure and temperature being made automatically, "Gz"; L6 - electricity units, "E"; L7 -actual apartment or accommodation temperature in kelvins or degrees Celsjus.

Section S2 includes electro-mechanical counters L1a to L6a that functionally correspond to the displays L1 to L6; they keep up the actual counting in case of any supply disturbances to liquid crystal displays that would cancel the readings of the electronic store. Section S2 is provided with a protected cover.

Section S3 includes adjusting means N1,N2,N3,N4,N5,N6,N7. Adjusting means N1 is designed for setting the minimum permissible temperature $\theta_{io}$ of air in apartment interior; N2 - for setting the lower permissible temperature value of water return from central heating elements, $\theta_{go}$; N3 - for setting the upper permissible temperature value of water return from central heating elements, $\theta_{gx}$; N4 - for setting the minimum possible dynamics or temperature changes in the apartment in respect to $\theta_i$ that is still detected by the thermometric system, $A_m$; N5 - for setting the minimum permissible temperature value of warm water in the apartment water system $\theta^{cm}$ below which L3 is switched over to L4; N6 - for setting the period of measurement repetition so as to effect the measuring function of small static thermal energy losses, $t_N$; N7 - for setting the temperature measuring sensitivity $\theta_N$ in co-relation to the function of N6.

Section S4 is a reserved space. Sections S2,S3,S4 are provided with covers and locks. Section S3 will be sealed with a required metal means, e.g. with lead. External connections to the unit are designed as multi-pole plugs and sockets. The complete housing including functional measuring modules is adapted for a replacement to a new complete unit to be supplied by a technical service specialist in case of detected errors or defective operation, and if self-checking monitoring system informs about any disturbances.

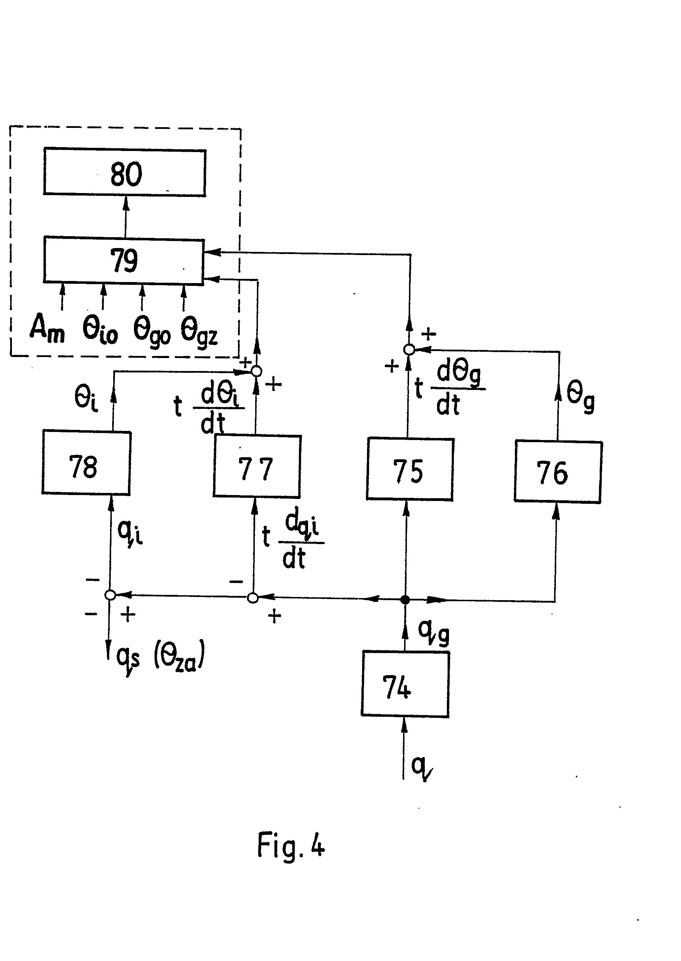

Fig.4 shows method of measurement for the thermal energy measuring function in accordance with this invention. The measuring procedure includes transient and steady states of indoor-air temperature $\theta_i$ which is the measured counted-up physical quantity, the temperature $\theta_i$ being a factual effect of heat quantity supplied to apartment interior 78; in calculations the empirical factor $k_n$, formula 1, shall be used. The temperature measurements are aided by the control function of temperature $\theta_g$ which is measured at water return branch or central heating radiator, the measurements also including transient and steady states of the heating medium, e.g. heat transfer water in the radiator, so as to obtain controlling signals for the measuring system from the actual value of temperature $\theta_g$.Note that the water return temperature $\theta_g$ is influenced by several types of disturbance, first of all including such quantities as $\theta_i$ in interior 78, radiator supply temperature $\theta_{gz}$, pressure drop of heating water or heating surface of radiators.

Central heating system of an apartment or similar accommodation can include one or more risers 74 of the central heating system, one or more radiator valves 75 and radiators 76, windows and doors 77 and apartment interior 78 comprising one or more rooms or accommodations, all the physical aspects forming a separate thermal system that will use the heat to be measured.

Thermometric and converting system 79,80 is linked to thermometric sensors, for example thermistors, and switching and counting circuit 80 being connected to a digital display that shows up the actual sum of added kelvin-hours and another display showning an actual value of $\theta_i$. The thermometric and converting system 79,80 can be a part of a complete structural lay-out of the multifunction measuring unit as shown in fig.1 or a modification of that lay-out but with only single measuring function to be employed as a separate thermal energy counter based on the method in accordance with this invention.

From riser 74 through radiator valve 75 heat flows to radiator 76 that delivers heat to interior 78 provided with windows and doors 77. Heat flux q from the central heating system flows to each radiator as

radiator supplying flux $q_g$. Flux $q_g$ is adjusted by radiator valve 75. Thus the required level of temperature $\theta_i$ is maintained and heat losses of interior 78 are suitably balanced which corresponds to heat flux $Q_i$ and heat flux $q_s$, respectively. The two heat fluxes ensure a stationary state of $\theta_i$ in interior 78. In transient states the heat losses are respectively changing, for example, if windows and/or doors are open so as to effect interior ventilation; then an additional heat loss takes place through external building partitions to the exterior which corresponds to the expression $t \frac{dq_i}{dt}$ in fig.4. interior temperature changes depend also from temperature $\theta_{za}$ of the outdoor air as an effect of corresponding heat losses q /$\theta_{za}$/. As $\theta_i$ changes because of changing heat fluxes, so does the temperature $\theta_g$ in water return pipe of radiator 76, temperature $\theta_g$ being employed for the control of measuring operations and counting up of kelvin-hours of the values of temperature $\theta_i$. Both quantities are measured and corresponding measuring signals are received by thermometric system is accordance with this invention from thermometric sensors that ensure measurements of average values of these quantities, i.e. $Q_i$ is an average temperature of air in interior 78 and $\theta_g$ in an average temperature of water return from radiators 76 in the apartment. In practice, heat flux changes caused by heat sources and heat losses periodically influence the actual values of $\theta_i$. The thermal stability of apartments is a main complex parameter of the basic stationary state of apartment thermal conditions if thermal fluxes from radiation and convection only decide about heat exchange. The heat by convection is taken over by the apartment interior surfaces; the interior air does not take part in heat exchange by radiation that directly heats up wall surfaces and changes their temperature.

In Table 1 the basic states of thermal energy use during heating season have been singled out because of the role they have in the apartment interior when the quantity of thermal energy is measured according to this invention. They include all the characteristic aspects relevant for changes in thermal conditions as can be encountered in an apartment or similar accommodation.

The thermal stability depends on, for example, the characteristics of inner or external building partitions, radiators, given apartment equipment, number of persons in the apartment. Dynamics of temperature changes of apartment interior air and wall surfaces is influenced by the thermal stability. The changes of $\theta_i$ characteristically depend on each one of the basic states of thermal energy use as specified in Table 1. Each such a state corresponds to some type of thermal consumption uses in an apartment during heating season. The basic states form the physical conditions for measurements to be carried out by the thermometric measuring function in accordance with this invention. Thus, the conjuction $A = \frac{d\theta_i}{dt}$ and

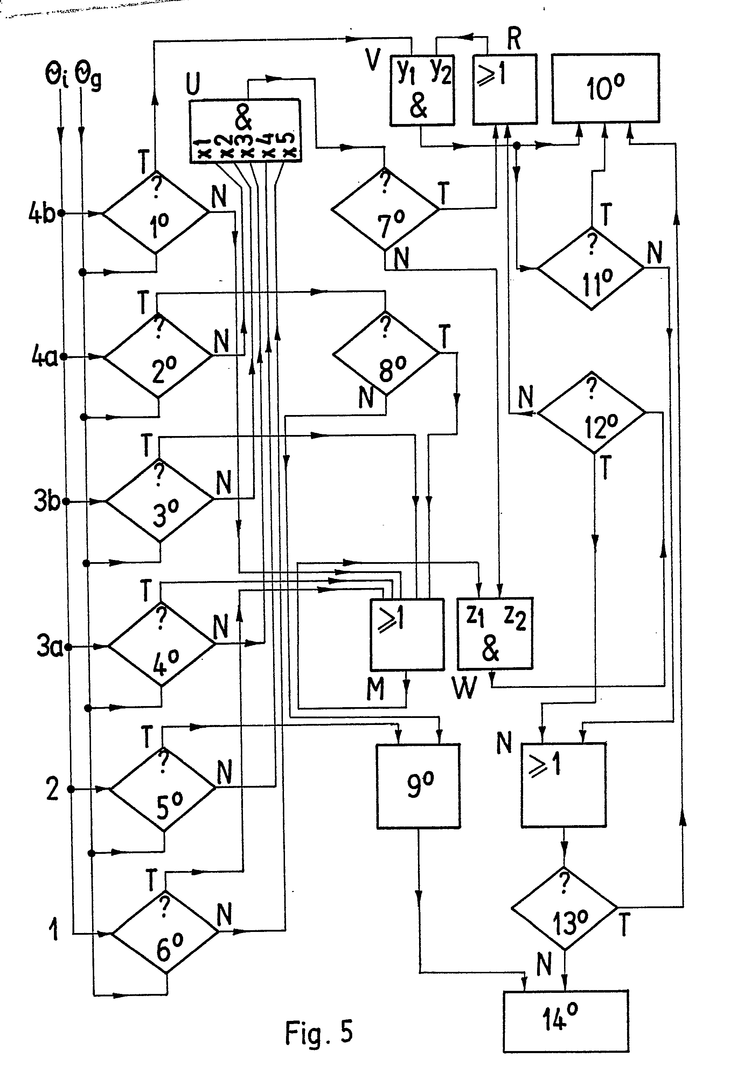

$B = \frac{d\theta_g}{dt}$ shall decide about counting up the kelvin-hours according to this invention if it is accompanied by changes of $\theta_i$ that are more or less dynamic in character, e.g. as linear steep slope or almost like a step function as well as the dynamics can be rather insignificant and can be assumed to be a steady state spatial field. of temperature $\theta_i$. The aspects of the dynamics or temperature changes and the conjunctions are in more detail explained with reference to fig.5.

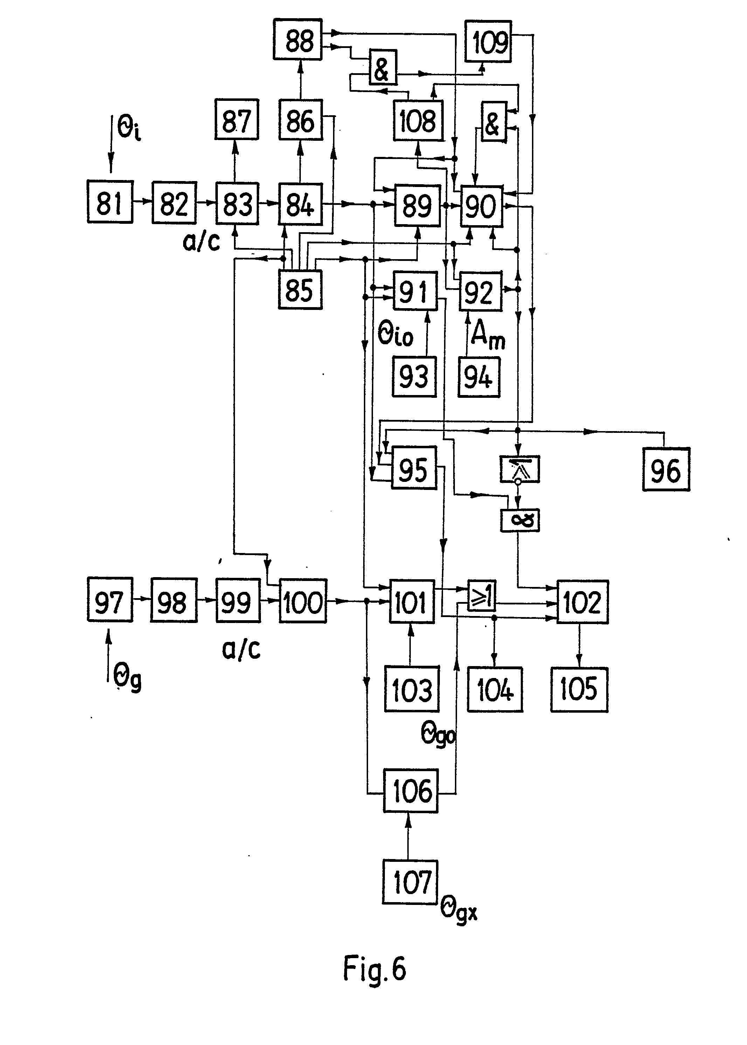

The explanations given will also refer to Table 1. According to thermal conditions and actual type of heat use the value of $\theta_i$ as measured and counted up will change. Measurements of $\theta_i$ and A are performed with thermometric sensor or thermometric sensors, e.g. thermistor type, conveniently connected to thermometric circuit 79. Measuring operations of circuit 79 are carried out according to sequencies determined by the functional diagram of operations and conditions in fig.5. The operations and conditions are implemented by methods and techniques as usually employed in known analog-digital counting circuits and with the use of known electronic components.Generally, they are functionally explained in fig.6 with reference to their role in the measuring system in accordance with this invention.

Relative to the actual thermal conditions the three-member conjunction as in fig.5 can be singled out by circuit 79; the increase or the decrease of $\theta_i$ and/or $\theta_g$ as well as the fact if controlling temperature $\theta_g$ is actually higher or lower than its minimum value $\theta_{go}$ are measured so as to select the proper conjunction. The counting of kelvin-hours can only be made if circuit 79 detects:

either $\theta_{go} < \theta_g$    /2/

or $\theta_{gx} > \theta_g$    /2a/

where: $\theta_{go}$ is the minimum average temperature water return from radiators of central heating system in the apartment within the period of heating season and set up in circuit 79 by the thermal energy supplier; $\theta_{gx}$ is the maximum average temperature of water return from radiators to be set up by the thermal energy supplier as $\theta_{go}$ and at the same time; $\theta_g$ is the actual measured value of water return temperature to be converted into measuring signals of thermometric sensors for the control purposes of measurements of $\theta_i$

The counting operation of kelvin-hours shall be interrupted and an interrupt signal is issued if circuit 79 detects that

either $\theta_{go} > \theta_g$    /3/

or $\theta_{gx} < \theta_g$    /3a/

The above conditions are superordinated relative to the conjunctions as specified in fig.5 and Table 1.

The actual changes of $\theta_g$ are used as criteria of discrimination between valve closure or valve closure operation of radiator valve 75 and the interruption of heat flux q, and consequently also heat flux $q_g$, and the operation and closing windows and/or doors 77 so as to effect ventilation of apartment interior which corresponds to basic thermal state no.2 in Table 1. The discrimination criteria are necessary to maintain a positive relationship between the true average value of $\theta_i$ in the apartment and the actual received quantity of heat from heat flux $q_g$ supplied by radiators 76 in accordance to their actual thermal power.

Also the signal of interruption acts as a superordinated condition so as to interrupt the counting of kelvin-hours if circuit 79 would detect

$\theta_i < \theta_{io}$ or $\theta_i > \theta_{io}$    /4/

as indicated in fig.5, $\theta_{io}$ being as explained above.

As specified in Table 1, basic thermal state No.1 is called a stationary one and is present if radiator valves 75 are open, windows and doors 77 are closed and apartment thermal insulation is normal. The temperature change dynamics of air $A = \dfrac{d\theta_i}{dt}$ is small and negligible, average temperature of water return $\theta_g$ satisfies the relationship according to formula 2. Kelvin-hours are counted up according to the algorithm for state No.1 in fig.5.

Basic thermal state No.2 pertains to the ventilation of apartment interior if relatively large quantity of cold outdoor air at its temperature $\theta_{za}$ suddenly flows into the apartment interior 78 through open windows and/or doors 77 since a moment $t_1$. Although radiator valves 75 are open and there is steady state of heat flux $q_g$ , i.e. $\theta_g$ satisfies formula 2 and measured $B = \dfrac{d\theta_g}{dt}$ is near zero at the starting period after $t_1$, a decrease of average $\theta_i$ in interior 78 will follow and in character it will be similar to a step function that corresponds to negative transient /-A/. Under ther mal conditions in basic thermal state No.2, prior to counting up kelvin-hours, circuit 79 issues a total compound signal

(-1) (-A) + $\theta_i$    /5/

and if a change of $\theta_i$ which is similar to a step function will follow since $t_1$ but /-A/ has its large absolute value, the value of $\theta_i$ prior to $t_1$ is stored in the memory of circuit 79 as a constant value and will be added afterwards as a constant component of the total compound signal to the aperiodic component of the signal as indicated in formula 5. The operation as illustrated by formula 5 is continuously performed up to moment $t_2$ when expression /-A/ changes into positive value, i.e. when windows and doors 77 are already closed and the ventilation of apartment has been stopped. If other factors are maintained unchanged, strong dynamic increase of $\theta_i$ follows and /+A/ is obtained; the absolute value of A decreases until $\theta_i$ reaches its steady state value in accordance with stationary state No.1, Table 1. It can be seen that the total compound signal as shown in formula 5 shall be counted up within the period as determined by moments $t_1$ and $t_2$ and corresponding number of kelvin-hours will be added up and displayed on the counter.

In case of apartment ventilation, the thermal losses will correspond to the temperature drop as follows

$\Delta \theta_i = \theta_{i1} - \theta_{i2}$    /6/

where: $\theta_{i1}$ is an average air temperature in apartment interior when there actually is present a thermal stationary state of $\theta_i$ prior to ventilation start at $t_1$, still before the opening of windows and /or doors 77 and $\theta_{i2}$ is an average air temperature in interior 78 during the apartment ventilation , the latter being substantially lower than $\theta_{i1}$ and lasting up to $t_2$, and suitably converted by thermometric sensors into the aperiodic component of the total compound signal as illustrated by formula 5.

The counting of kelvin-hours for the apartment ventilation from $t_1$ to $t_2$ only depends upon the confirmation by circuit 79 that there is present the conjunction which corresponds to state No.2, Table1. The counting is not interrupted by any superordinated condition. However, the counting of ventilation losses can also be dependent on the superordinated condition in accordance with formula 3a as valid for other types of actually measured conjuntions to be detected by the thermometric measuring system, i.e. kelvin-hours are counted up if the actual average temperature of water return from radiators $\theta_g$ is not higher than $\theta_{gx}$; otherwise the counting of kelvin-hours is stopped according to the superordinated condition. The total compound signal converted into kelvin-hours of thermal losses lasts up to $t_2$, i.e. when ventilation is stopped. Circuit 79 detects the fact because dynamics A changes from /-A/ to zero and then rises as /+A/ and then decreases its absolute value again so as to become zero at stationary state No.1, Table 1. At the same time the dynamics B is near zero because of dead zone of the thermometric sensor specially designed for measurements of average temperature of water return from radiators, $\theta_g$, so as to delay changes of analog signal values of $\theta_g$ coming from all the radiators in the apartment. At that situation circuits 79,80 store $\theta_{i1}$ no longer after $t_2$. The aperiodic component of the total compound signal also changes but it is measured as the actual full value of the average air temperature $\theta_i$ when windows and/or doors 77 are closed; counting up is continued by the counter of circuit 80. As the absolute value of $\theta_{i1}$ is no longer present and thus the operations in accordance with formulae 5 and 6 do not longer take place after $t_2$. The counting is carried out in accordance with actually detected conjunction type.

In circuits 79,80 there is set up a constant value $/-A_m/$ that corresponds to the situation of minimum level of ventilation which can still be detected and is interpreted by the circuits as a thermal state different than state No.2, Table 1.

If inequality is present either

$$- A_m < -A \qquad /7/$$

$$\text{or} - A_m > -A \qquad /7a/$$

then correspondingly either an apartment ventilation is taking place because the absolute value of A increases with high dynamics or there is only some thermal energy leak, e.g. windows are not closed tightly enough. Depending on the measuring sensitivity of circuit 79 the ventilation can be interpreted as a relatively small opening of windows and/or doors 77. The value of $|A_m|$ would require to be empirically set as one of the settings of the device in accordance with this invention. Note that in case of inequality according to formula 7, temperature drop $\theta_i$ is counted up as kelvin-hours to increase the heat share of the apartment in accordance with formula 1, and consequently increasing payments for the heat losses, but in case of inequality according to formula 7a the kelvin-hours from the small temperature drop are not taken into account. However, the situation is more or less present at all the building apartments and therefore according to formula 1 it can be compensated by calculations in accordance with this inventions.

Thermal state No.3a and No.3b, Table 1, explains the subjective process of ensuring the required thermal comfort in the apartment. According to real needs and likings for a proper level of temperature in apartment interior, the user adjust the thermal power of radiator 76 by means of radiator valve 75. A change of radiator thermal power is the actual goal to be effected by the valve adjustment so as to get the appropriate temperature $\theta_i$; usually how much heat is used to attain the purpose is not so important, at least directly when the thermal comfort is desirable. The actual need must be satisfied. Besides $\theta_i$, the thermal comfort also depends on other influences like building surface radiation, relative air speed and other. Opening changes of valve 75 does not influence much the values of $\theta_g$ within the controlled range of dynamic changes, i.e. B is near zero. Therefore, higher or lower temperature $\theta_i$ attains its steady state depending on apartment time constant and thermal stability of the actual thermal system.

The kelvin-hours are counted up as described above for state No.1 i.e. directly depending on the actual increase or decrease of $\theta_i$.

Apart from the above normal operating conditions in an apartment, there are states No.4a and 4b, Table 1, that come from some technical service manipulations within the building. The basic thermal state No.4a shall be considered according to inequality as expressed by formula 7 when there is a situation very close in character to intense ventilation, see: state No.2,Table 1. It can also happen that an inequality will show up which satisfies formula 7a; then the situation is similar to state No.3a, Table 1. In case of state No.4b, the risers of central heating system do not supply heat flux q, fig.4. Radiators 76 cool down to the water return temperature $\theta_g$ that is lower than $\theta_{go}$ as set up in circuit 79. An interrupt signal for counting the kelvin-hours is sent and acts as the superordinated condition in accordance with formula 3 and conditions shown in fig.5. Besides, the condition according to formula 4 is also valid here because $\theta_i$ is low. If none of the states from No.1 to No.4a is present but there is only state No.4b, then signals from x1 to x5 are received by AND-gate labeled as U in fig.5; if the inequality according to formula 4 is satisfied as $\theta_i < \theta_{io}$, interrupt signal to stop kelvin-hours counting will be present as there simultaneously are signals y1 and y2 at AND-gate labeled V in fig.5. The counting of kelvin-hours will start again if at least one of states No.1 to No.4a will be detected, state N 4b is not present and there is an enabling signal for counting, s the temperature satisfies inequality $\theta_i > \theta_{io}$.

Fig.6 shows measuring system according to this invention that is provided with sensor or sensors 81, for example of thermistor type, in apartment accommodations so as to measure an average air temperature $\theta_i$ in the apartment. Analog signal is supplied to preamplifier 82. Output of preamplifier 82 connects to analog-to-digital converter 83. One output of converter 83 connects to display 87 that gives readings of the actual value of $\theta_i$ in kelvins. The other output of converter 83 connects to circuit 84 so as to store $\theta_i$ value by circuit 84 at the measuring moment, and circuit 84 connects to gating circuit 86, which then connects to circuit 88 that stores $\theta_i$ value from the preceding measurement. Circuit 88 from one output sends its signal to AND-gate that its second input signal receives from circuit 108 which is designed for checking if dynamics A higher than zero or A is lower than zero. That second input signal of AND-gate is either enabling or disabling signal so that the output signal of AND-gate was supplied to circuit 109 which stores $\theta_1$ value prior to $t_1$; after moment $t_1$ the absolute value $|A|$ is higher than absolute value $|A_m|$, $A_m$ being the

set value of $\theta_i$ change dynamics. Circuit 109 connects to circuit 90 which is an arithmetic circuit designed for adding temperature value from preceding measurement to the temperature difference as calculated according to formula 5. Circuit 88 from its second output directly connects to the input of circuit 89 and circuit 90. Arithmetic circuit 89 subtracts temperature value of preceding measurement from the actual measured value and sends its signal to circuit 108 to second input of circuit 92 which compares if calculated temperature difference $\theta_i$ exceeds $A_m$ as set by adjusting means 94. Circuit 108 sends its second output signal to another AND-gate which conne to the input of circuit 90 if AND-gate will receive a signal from circuit 92 which the same signal connects to ciecuit 90, also to circuits 95,96 and to an inverter from which the signal goes to yet another AND-gate as its one input signal and its second input signal comes from circuit 91 which compares if $\theta_1$ at the moment a measurement is not lower than $\theta_{io}$, $\theta_{io}$ being the set value. The above mentioned output signal of circuit 92 is provided for enabling and AND-gate output signal being connected to circuit 102 is for disabling. The other input of circuit 102 receives its second disabling signal from OR-gate which receives its two input signals, one from circuit 101 and the other from circuit 106. Circuit 101 compares if the average temperature of water return $\theta_g$ is lower than $\theta_{go}$ at the moment of measurement and circuit 106 compares if $\theta_g$ is higher than $\theta_{gx}$ at the moment of measurement. Circuit 93 is designed for setting $\theta_{io}$ in circuit 91,and circuit 94 is adjusting means for $A_m$ in circuit 92. Besides, circuit 103 is adjusting means for setting $\theta_{go}$ in circuit 101, and circuit 107 is for setting $\theta_{gx}$ in circuit 106. Timing generator 85 supplies signals to all circuits that require timing operations. Circuit 84 connects to switching circuit 95 which also receives signal from circuit 90 and controlling signal from circuit 92, the latter being also connected to above mentioned inverter and to display 96 of red colour, for indicating that kelvin-hours are counted up at actually higher thermal losses than normal because there is either apartment ventilation according to state No.2 or state No.4a, Table 1. Circuit 102 connects to counting-up display 105 which displays kelvin-hours. From switching circuit 95, its output signal goes to green display 104 which indicates the normal state of kelvin-hour counting to be shown on counter 105, and to circuit 102 which makes adding operation of $\theta_i$ values, the operation is being effected, for example, every one minute.

Thermometric sensor or sensors 97, for example for thermistor type, are to be installed on water return pipes of heating radiators so as to measure average $\theta_g$. Analog signal is supplied to preamplifier 98 which then connects to analog-to-digital converter 99. Converter 99 connects to circuit 100, and next to circuit 101 and circuit 106. Circuits 101,106 send their outputs so as to disable and interrupt the counting up in circuit 102 if set values $\theta_{go}$ or $\theta_{gx}$ become exceeded.

Direct measurements of B as shown in fig.5 and Table 1 are substituted for indirect measurements. This can be made by the use of set values of $\theta_g$ and by means of an adequate selection of thermometric sensor design so as to measure $\theta_g$ with an analog signal that is delayed relative to an actual change of $\theta_g$.

The method in accordance with this invention also includes measurements of thermal energy losses in an apartment when they are static in character, and not dynamic as above described from considerations about dynamic changes of $\theta_i$. It usually pertains to rather small thermal losses but lasting for some time. The reason for that kind of thermal energy loss is a long-lasting but limited, slightly opening of window, for example. However it is so small that it cannot be interpreted by means of the dynamic function of measuring system and then the total compound signal cannot be switched on so as to add up the static thermal losses to the counted-up kelvin-hours to be paid by the apartment user. The same situation is present when long-lasting cold wind becomes the reason for the losses in the apartment, in particular when the apartment thermal insulation, e.g. single window glas sheet, is inadequate and at variance with valid standards and/or the terms and conditions of an agreement for thermal energy delivery to the apartment in question. Under those conditions a small static temperature drop of $\theta_i$ is present within the apartment interior. The measuring principle according to this invention would require to always measure and count up any decrease of $\theta_i$ when the identified reason of the temperature drop is any thermal energy loss to the exterior environment but involved either by infringement of terms and conditions of heat delivery agreement or by the purposefully effected thermal losses. The function of detecting the static thermal loss is referred to the basic stationary state No.1, Table 1. It is assumed that thermal energy losses cause a measurable decrease of $\theta_i$ and its steady state drop is lower than the actually set up one, $\theta_N$ as shown in fig.1. The actual setting $\theta_N$ depends on the measuring sensitivity as interpreted by A and it should be determined by experience in relation to the response of thermometric sensor under the ventilation conditions. The value of $\theta_N$ will be lower if thermal losses are more accurately detected by the use of dynamic changes of $\theta_i$ that release the total compound signal of heat measurements.

If there is the stationary state No.1, Table 1, the thermometric sensor of $\theta_i$ detects a lower value of $\theta_i$, for example of 0.5 K. The identification of the original reason for the small temperture drop, actually being in its steady state and having its value within the set range of $\theta_N$, is performed by the measuring system according to this invention if it is accompanied by certain physical conditions that form a set of identification

12

criteria. First, measuring system periodically repeats the measurements of $\theta_i$ and scans the measured values within the time setting span of repetition of measurements, for example, every one hour. Second, the stationary state is actually present and the value of $\theta_i$ is known while the actual change of water supply temperature of radiators in the apartment is so small that can be assumed negligible or zero. i.e. such a temperature change cannot,within the set period of time, cause the temperature drop of $\theta_i$ as the time is too short for that and the temperature change too slow; however, the value of $\theta_i$ can significantly change, decrease or increase, by several kelvins or more if valve opening changes while radiator valve is adjusted. That kind of adjustments are of a dynamic character and cause temperature changes of $\theta_i$ to be higher than set value of $\theta_N$; besides, they quickly attain their steady state. The corresponding temperature dynamic states are detected by means of A and B conjunctions - see: Table 1 anf fig.5. Third, at the start of each repeated scanning, the actual value of $\theta_i$ is stored and becomes a reference steady state value of $\theta_i$ for the afterwards measurements to follow within the repetition period of measurements. If the drop of $\theta_i$ lasts, for example, though three subsequent instants of sampling, then it causes the total compound signal to be switched on, i.e. the absolute value of detected temperature drop of $\theta_i$ is added to the actual reference temperature value of $\theta_i$ and the sum of those values is counted up as kelvin-hours as long as the measurements detect the existence of the temperature static drop of $\theta_i$.

The thermometric system of $\theta_i$ can ensure the maximum measuring sensitivity due to the fact that each separate accommodation is provided with its own thermometric sensor that directly and independently acts on the system thermometric function. Then measurements are selectively dependent on values of $\theta_i$ within the accommodation and do not depend on the remaining accommodations. The actual number of kelvin-hours as counted up for the apartment will be determined by calculation in accordance with a computer program that will include the counted-up kelvin-hours in total and the known number of thermometric sensors.

Digital display 105, for example, of liquid crystal type is coupled to an electromechanical counter so as to parallelly count up kelvin-hours. In case of supply interruption, the electromechanical counter will give the valid readings.

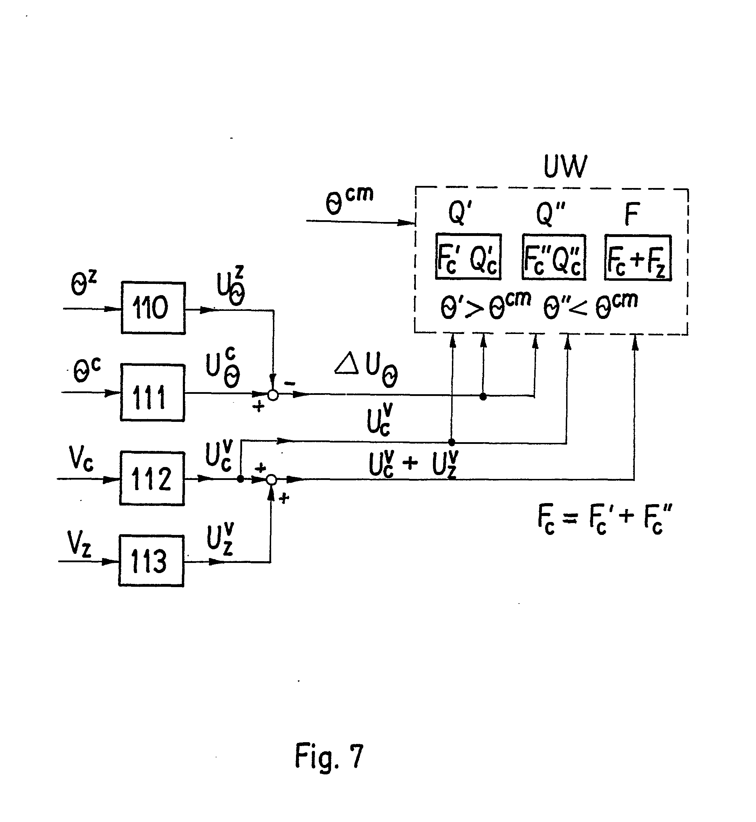

Fig.7 shows the method of warm and/or cold water measurements relative to one pipe branch of warm water and one pipe branch of cold water in an apartment. Thermometric sensor 110 measures cold water temperature $\theta^z$ and sends out its measuring analog signal $U_\theta^z$. Sensor 111, identical as 110, sends out its signal $U_\theta^o$ so as to give the actual temperature of warm water, $\theta^c$. Those two signals are continuously compared with each other and the value difference is being processed by converting and reading circuit UW of the water meter measuring function.

Depending on $\theta^c$ being within a range of $\theta^*$ that is higher than $\theta^{cm}$ or within a range of $\theta^*$ that is lower than $\theta^{cm}$, the change-over switching of digital displays $Q^{'}$ or $Q^{''}$ will take place so as to count up the thermal energy quantity according to higher or lower unit price, respectively. The control value of $\theta^{cm}$ is set up in circuit UW and can be, for example, $30^\circ$C so as to assume by convention the minimum permissible warm water temperature below which only lower unit price is due.

Flow sensor 112 measures warm water volumetric flow $v_c$ and has its output signal $U_c^v$. Signal $U_c^v$ is multiplied by the time periods of warm water flow so as to count up the warm water quantity $F_c$ within time $t_k$. The corresponding products of multiplying operation are summed up in circuit UW. Additionally, signal $U_c^v$ is multiplied by temperature difference signal $\Delta U_\theta$ and then the calculated products are summed up either by digital display $Q^{'}$ or $Q^{''}$ as above explained. It is seen that the sum of products shown by displays $Q^{'}$ or $Q^{''}$ determines the thermal energy quantity as received in the apartment warm water volume if the relevant constants of measuring system are taken into consideration. The water quantity is counted up as shown on digital display F of watermetering circuit UW but within the same time intervals as heat quantities shown on displays $Q^{'}$ or $Q^{''}$. The warm water quantity $\Sigma F_c$ is not shown in accordance with this invention by a separate digital display but is summed up simultaneously, in real time, with cold water volume. Cold water flow sensor 113 has its output signal $U_z^v$. The total quantity of warm water and cold water is determined by $U_c^v + U_z^v$ and shown on digital display F.

Apart from the watermetering function of the multifunction measuring unit in accordance with this invention, also other modification of water meter systems are possible. For example, there can be an independent apartment water meter with more digital displays that would include additional readings such as separate displays of warm water and cold water quantities.

In one apartment there is only one sensor 110 but sensors 111,112 and 113 can be employed in any number that would result from the number of warm or cold water plumb-lines and fittings in the apartment. The cross-section of flowmetering sensors can be of any shape but all of them are always provided with the same shape and properly corresponding dimensions within the building system of measurements.

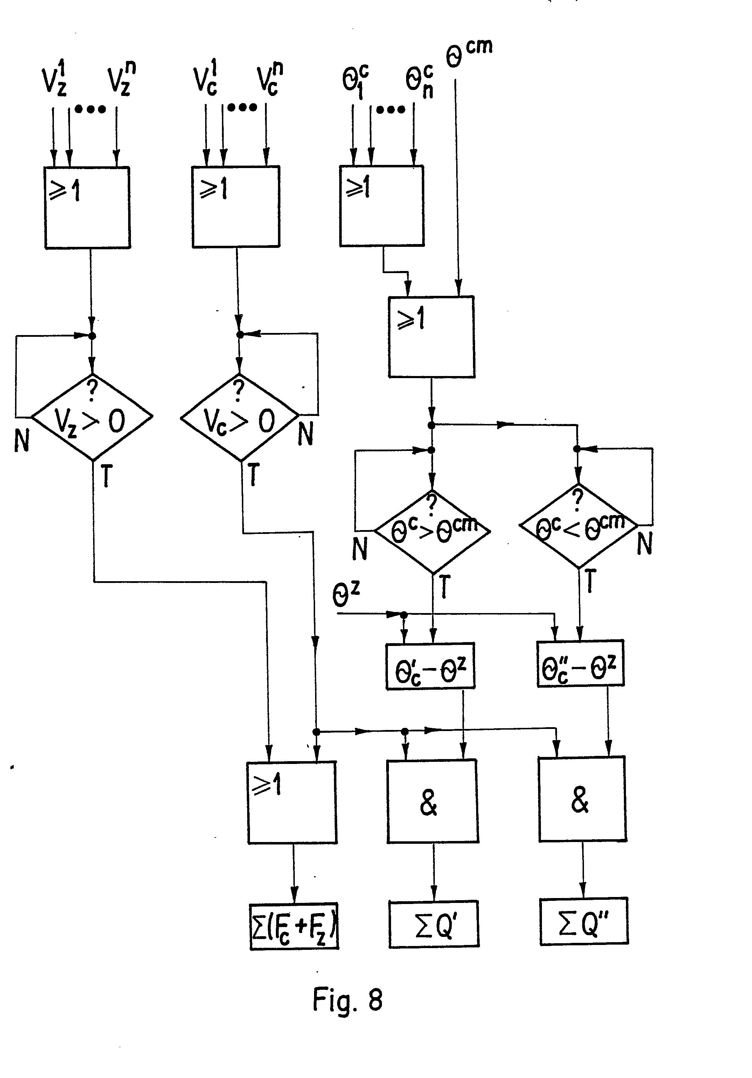

Measuring operations are shown in more detail in fig.8; measured quantities $v_z^1 ... v_z^n$, $v_o^1 ... v_c^n$ and $\theta_1^0 ...$

$\theta_n^0$ after converting are supplied as measuring signals to the measuring circuit in accordance with this invention. Sensor 110 gives reference signal from cold water temperature $\theta^z$ in order to obtain the temperature difference either for the higher unit price or lower unit price of warm water, and $\theta^{cm}$ is set in the measuring system so as to switch over and count up the heat in warm water according to the actual value of temperature $\theta^c$. If a condition within the network of operational conditions is not satisfied, measuring system is waiting till the proper condition enables measurements, i.e. for the warm or cold water flow and for a temperature value $\theta^c$ which is either higher than $\theta^{cm}$ or lower than $\theta^{cm}$. Display system F receives digital measuring signals of water volume from OR-gate and counts up the quantities of cold and warm water in real time. Besides, digital signals from discrete quantities of warm water are received by the circuit of display $Q'$ or the circuit of $Q''$ through corresponding AND-gates that also receive the digital signals of temperature difference, $\theta^* - \theta^z$ or $\theta^* - \theta^z$, respectively. According to the AND-gate principle of operation, the heat count up can follow if there is a measurable warm water flow, at least, in one flowmetering sensor. Sensor 110 need not be employed and $\theta^z$ can play the reference role if assumed to be constant by convention The value of $\theta^{cm}$ and the value of $\theta^z$ are set values of circuit UW.

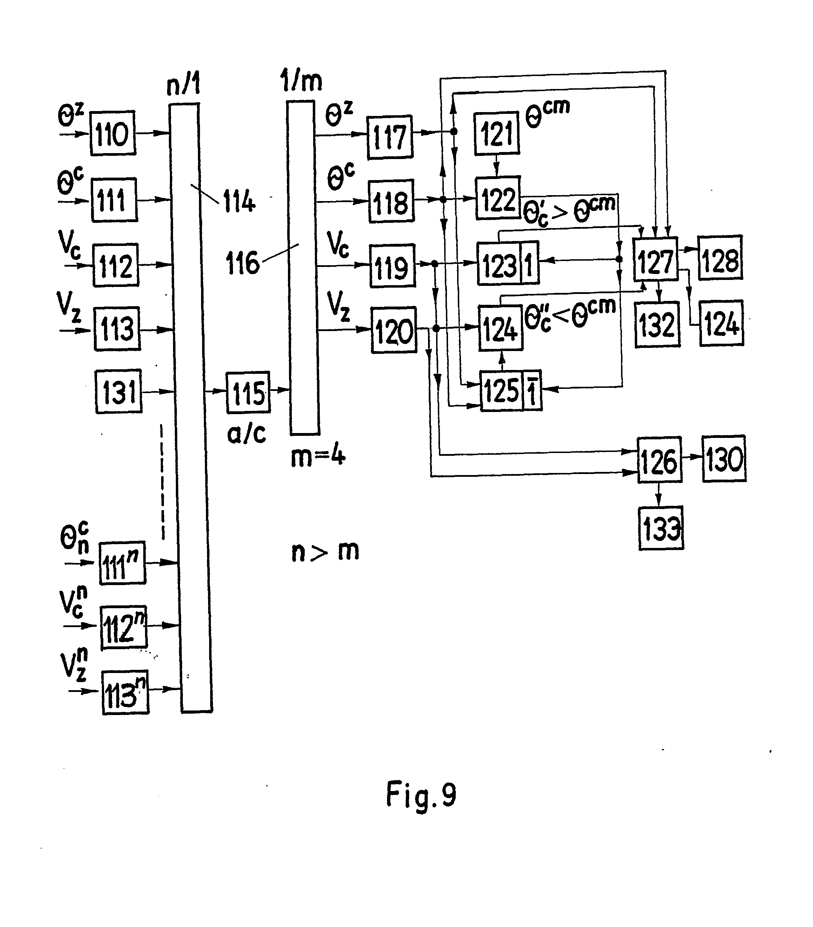

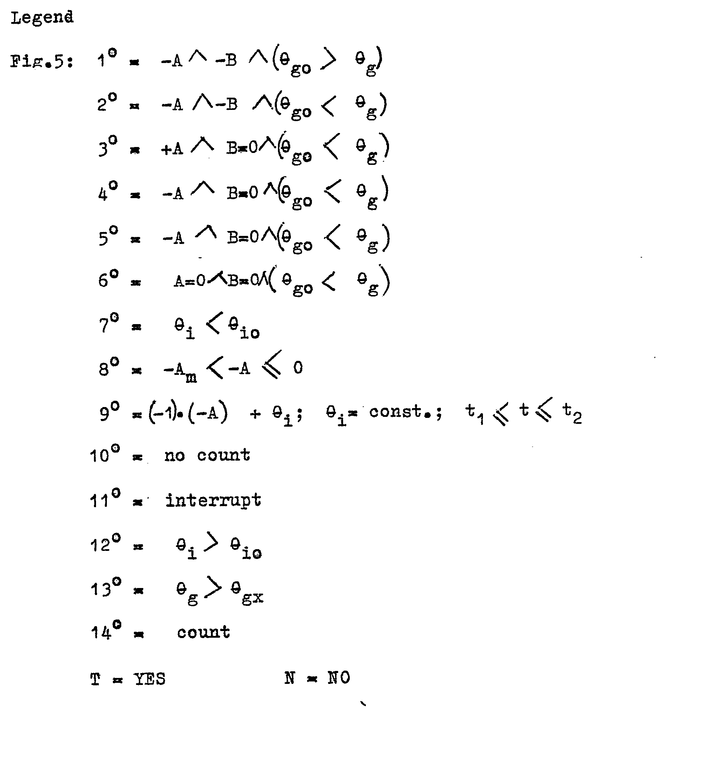

Fig.9 shows a modification that can be employed as an apartment two-rate water meter provided with two-rate thermometric function. Sensors 110,111,112 and 113 are connected to switching circuit 114 that receives analog signals from the actual number of flowmetering and thermometric sensors as installed in the apartment. Analog-to-digital converter 115 converts the measured quantities into digital signals which are received by switching circuit 116 of digital signals. Switching circuit 116 connects to buffers 117,118,119,120. Buffer 117 for digital signals of cold water temperature connects to multiplying and totalizing circuit 127 and to circuit 125 that compares the actual warm water temperature and the actual cold water temperature. Buffer 118 for digital signals of warm water temperature connects to circuits 127,122 and 125. Buffer 119 for digital signals of warm water volumetric flow connects to circuits 124, 125 and 126. Buffer 120 for digital signals of cold water volumetric flow connects to circuit 126 that adds up the measured volumes of warm and cold water and connects to digital display 131 so as to show the actual total water volume as utilized in the apartment. Circuit 122 compares the digital signal which gives the actual value $\theta^c$ and is received from buffer 118 to digital signal from circuit 121 and serving as a control signal for the thermometric function in references to $\theta^{cm}$, the set value being a condition of switching over. Circuit 123, if it received enable signal from circuit 122 and signal from buffer 119, sends out its output signal to circuit 127 so as to switch on the warm water volumetric measurement to be measured by flowmetering sensor 112. Circuit 124 having received a signal from buffer 119 and from circuit 125 connects to circuit 127 if $\theta^c$ lower than $\theta^{cm}$ so as to switch the lower thermometric rate. Circuit 125 having received a signal from buffer 117 and a signal from buffer 118 form signal of temperature difference $\theta^c - \theta^z$ and transmits the value to circuit 124 if disabling signal is removed from circuit 122. Circuit 127 multiplies and adds up digital signals of $\theta^c - \theta^z$ and warm water volumetric flow that were received from buffers 117, 118 as well as from circuits 123,124.Circuit 127 switches on either circuit 128 of digital display $Q'$ or circuit 129 of digital display $Q''$. The output of circuit 122 decides about the switching on either $Q'$ or $Q''$.

Digital displays $Q'$, $Q''$ and F can be of liquid crystal type but their circuits include electromechanical counters that also count up the measured quantities. Their use is above discussed. The flowmetering system of water meter according to this invention includes a self-monitoring function that is ensured by circuits 131, 132, 133. Circuit 131 is a transmitter of monitoring signals and circuits 132,133 are comparators so as to check if there is the proper response to a reference signal. Visible message gives information about defective operation.

The water flowmetering function of the multifunction measuring unit or its modification as an apartment water meter that includes the thermometric function of warm water heat content employ formula 1 so as to make measurements in accordance with this invention. Both, the measuring functions of heat quantity and water quantity do not require full verification procedure as usually required for measuring instruments because in accordance with this invention they give results that are referenced to a main, duly legalized measuring instrument. Only independently used modifications that directly give their reading in legal units will need the proper metrological certification.

The readings of apartment water flowmetering units are related through correction factors to the water flowmetering function of the main reference multifunction measuring unit in the building as shown by formulae:

$$m_k^2 = \frac{Q_k^* + Q_k^{"}}{\sum_{k=1}^{k=n} (Q_k^* + Q_k^{"})}$$

correction factor of two-rate thermometric function /8/

$$m_k^1 = \frac{Q_k^1}{\sum_{k=1}^{k=n} (Q_k^1)}$$

correction factor single-rate thermometric function /9/

$$w_k = \frac{F_k}{\sum_{k=1}^{k=n} (F_k)}$$

correction factor of water flowmetering function /10/

where: $m_k^1$, $m_k^2$, $w_k$ dimensionless correction factors for the correction of readings in apartments; $Q^*$, $Q^*$ readings for higher or lower price as indicated by two-rate water flowmetering unit, the sum $Q^* + Q^* = Q_k^2$ being the total heat with no correction as used in the apartment; $F_k$ reading of the total cold and warm water volume as used in the apartment.

The formulae for corrected measured quantities are as follows:

$$Q_{ks}^* = \frac{Q_k^*}{Q_k^* + Q_k^{"}} \cdot m_k^2 \cdot Q_b$$

higher rate corrected heat quantity /11a/

$$Q_{ks}^{"} = \frac{Q_k^{"}}{Q_k^* + Q_k^{"}} \cdot m_k^2 \cdot Q_b$$

lower rate corrected heat quantity /11b/

$$Q_{ks}^1 = m_k^1 \cdot Q_b$$

corrected heat quantity for single-rate warm water flowmetering /12/

$$F_{ks} = w_k \cdot F_b$$

corrected water volume /13/

where: $Q_b$, $F_b$ heat quantity and cold water volume received by the apartment building as measured by the main reference multifunction measuring unit.

Measurements of water flow can be, for example, carried out by means of adherable piezoelectric transducers as ultrasonic sensors in the volumetric water flow measuring system according to this invention. The volumetric gas flow measuring system includes also ultrasonic sensors of known type. Depending on the kind of liquid or gas medium, the ultrasonic sensor parameters are to be properly adapted.

The multifunction measuring unit can be adapted to the actual number and kind of media as used in an apartment and building, for example if warm water in the apartment is prepared by means of gas heating,the water meter thermometric function can be removed.

The various prior art gas meters and electricity meters can be substituted in due course by a corresponding measuring function of the unit in accordance with this invention. The proposed measuring functions can be performed with higher accuracy than those of the prior art meters and ensure lower material and energy consumption index, and thus also a significant drop in unit prices. In new building projects the multifunction unit ensures more simple installation systems also with lower material consumption index and thus cuts down the cost of actual investments.

TABLE 1 - Basic thermal states of thermal energy use in apartment accommodations

| State No. | Functional application | Main operating aspects of thermal energy utilization and measurement | | | Physical conditions of thermometric measurement | | |
|---|---|---|---|---|---|---|---|
| | | Radiator valves, central heating riser | Window, door | Thermal insulation | $\theta_1$, measured and counted up, average air temperature of apartment interior $\dfrac{d\theta_i}{dt} = A$ | $\theta_g$, average temperature of heating medium return from apartment radiators $\dfrac{d\theta_g}{dt} = B$ | Dynamic changes of $\theta_1$ while the main operating aspects are changing; absolute values of changes / + or - / $\left|\triangle \theta_1\right|$ |
| 1. | Stationary state | o | z | n | A=0 | B=0 | small dynamics, assumed steady sta' |
| 2. | Apartment ventilation | o | o | m | -A | B=0 | negative step change - see: Fig.' |
| 3a | Thermal comfort maintainning | zz | z | n | -A | B=0 | negative, linear an· proportional change |
| 3b | | oo | z | n | +A | B=0 | positive, linear an· proportional change |
| 4a | Servive manipulation | zz | oo | m | -A | -B | negative step chang see: Fig.5 |
| 4b | | op | z | n | -A | -B | negative inertial change |

Legend: o - open; z - closed; n - normal; m - small or weak; zz - closing; oo - opening;
op - disconnection of riser of the central heating system

EP 0 328 885 A2

## EP 0 328 885 A2

**Claims**

1. A method of energy media and water measurement, especially in dwellings, including measurement of heat quantity, cold and warm water volume, gas volume and electric energy quantity while the media are supplied to an apartment from interior building installation systems of an apartment house or similar and the interior supplying systems receive the media form the municipal heat distribution network, water-pipe network, gas grid and electric power network, respectively, the measurements depending on control, processing and calculating of measuring data according to received control and measuring signals which are from measuring sensors that measure at selected places of installation within apartment interior separately each particular medium as used, depending on the function and the kind of physical aspect, and then after converting the measured physical quantity into analog output signal each sensor sends out its output measuring signal or control signal to a corresponding functional input, for example for measurement of heat quantity, water flowmetering, gas volume or electricity, the inputs belonging to an integrated multifunction measuring unit installed within the apartment, and the functionally integrated unit converts the received analog signals into digital signals and by means of timing clock ensures the programming of its subassemblies so as to convert signals at successive stages where the selection of measuring and control quantities is made, the quantities representing dynamic and static states in real time as measured correspondingly with measuring sensors of physical quantities, and also the unit adds up and selectively calculates the particular quantities of energy media and water as subsequently shown on separate digital displays, each medium having its own digital dis play and the digital displays being placed on a common signalling and indicating panel.

2. The method according to claim 1, wherein each physical factor as actually measured by the measuring functions has its quantity as being used in the apartment determined in real time and the quantity is shown on the digital display and acknowledged as a separate portion within the total consumption of that physical factor that is actually summed up for the whole apartment building or similar building, within which the apartment exists, and all the readings of the quantites of a given factor are summed up from every apartment and then a quotient is used where its numerator is formed from the reading of measured physical factor quantity as used in one apartment and its denominator includes the total of separate quantities of the measured same kind of the factor in all the apartments of the apartment building, the quotient being used for calculating a correction factor valid for an apartment and such a correction factor is multiplied by the absolute value of reading for the proper physical factor, its actual quantity being shown on the main reference multifunction measuring unit that is duly legalized and installed for the whole building, and then the corrected measuring result for the quantity of physical factor as utilized in the apartment is obtained and the corrected result is acknowledged as the valid basis of payments between the deliverer and the user of the physical factor in question.

3. The method according to claim 1 or 2, wherein the absolute value of heat quantity as received in apartment or accommodation is calculated as an individual portion within the total consumption of heat by the whole building, the apartment or the accommodation being a part of the building, the individual portion is determined relative to kelvin-hours to be counted up correspondingly within a monitoring period of instantaneous changes of air temperature measured values as detected in apartment interior or similar accommodation if heated up by means of radiators of a central heating system, the instantaneous air temperature value is being measured continuously and in real time within apartment interior according to all the basic thermal states of utilization of heat flux as received in the apartment interior that is singled out for measurements of the received heat quantity, and the actual due number of kelvin-hours is determined as well as the thermal parameters of basic thermal states are measured as being found in the singled out apartment interior and characterizing the existing thermal energy losses, operating transient states of system adjustments as well as failure states of central heating system, all of them are used as the measuring and calculating data of dynamic temperature changes so as to multiply the counted-up number of kelvin-hours times the empirical factor that is characteristic for the accommodation to be measured, the empirical factor being based on the thermal constant and dynamically changing properties of building construction and the related thermal conditions within the apartment or similar accommodation so as to obtain the products of those two quantities respectively and separately for each accommodation if the accommodation heat consumption should be measured, and then based on that for the monitoring period of heating season the portion of the total thermal consumption of the apartment building is calculated for the individual thermal energy user when already the sum of all the mentioned two-quantity products is

18

determined as well as the total heat quantity in legal thermal units of thermal energy corresponding to that sum of two-quantity products, the total heat quantity being actually received by the whole apartment building within the same monitoring period.

4. The method according to any one of the preceding claims, wherein the instantaneous values of air temperature in apartment interior or similar interior are measured and counted up depending on the actual average instantaneous value of heating medium temperature of return from particular central heating radiators and on the positive or negative changes of the actual average air temperature within the apartment interior as well as on the actual dynamics of positive or negative changes of the average value of heating medium return temperature of the radiators, the above quantities characteristically defining the physical conditions of heat quantity measurements of the quantity of thermal energy as received in the apartment or similar accommodation.

5. The method of claim 4, wherein the temperature values are measured in reference to a three-member conjunction of the measured quantities, the conjunction thus detecting the characteristic states of heat utilization so as to particularly distinguish the stationary state, the ventilation state, the thermal comfort maintaining state of dynamic changes when heat flux from radiators is adjusted by means of radiators valves or with other means and other states involved by adjustments of central heating equipment if the resulting states act on the measured quantities in any measurable way.

6. The method of claim 4, wherein the actual value of average interior air temperature,after being converted into a continuous measuring signal of thermometric sensor output, is counted up in the apartment counting device as kelvin-hours and also within a given time interval the analog changes of measuring signal are distinguished as to their dynamics of increase or decrease in reference to the three-member conjunction that includes changes of interior air temperature as one member, changes of heating medium temperature return from radiators as the other member and the third member that is an inequality of the set value and the measured value of heating medium temperature return from radiators, the inequality having the role of controlling the measurements of the interior air temperature, and the heating medium temperature at the return outlet of heating radiator is measured so as to measurably distinguish its dynamics of increasing or decreasing within the same interval and simultaneously as the measuring signal coming from the interior air temperature and counted up, and besides within the flow chart of operations and conditions said third member of the three-member conjunction has the superordinated role of deciding if a synchronous operating condition is or is not present in reference to the minimum set value of heating medium temperature of return from heating radiators as to whether the minimum set value is higher or lower than the actual average value of that said physical quantity.

7. The method of claim 4, wherein if one of the possible conjunctions of values and said dynamic aspects of the counted-up quantity and the control quantity are present,then with reference to the actually present basic thermal state, and depending on the operations and conditions of said flow chart, the analog measuring signal that represents the actual true change of average interior air temperature but being subsequently represented by values of digital signals, is counted up as kelvin-hours with strict reference to said kind of basic thermal state of heat consumption within the apartment or similar accommodation and if the stationary state is detected by the said conjunction, said signal is counted up but if the average air interior temperature is not lower than the said minimum permissible value as being actually set, whereas if said conjunction changes and the ventilation state is detected, then positive values of said signal coming from the negative increase, that is decrease of interior air temperature are added to the constant component of said signal, the constant component representing the interior air temperature value as measured before the start of said ventilation state, now decreased because of large heat losses during ventilation period proportionally to the ventilation intensity and its duration, and said positive values of said signal represent the aperiodic change of the interior air temperature drop with a steady state of said decreased temperature value when said ventilation period is long enough, whereas said full signal as the total of constant component and aperiodic component, that is the total compound signal is counted up as kelvin-hours, but if another kind of the three-member conjunction than that for the ventilation state will show up, then the signal for representing said average interior air temperature value will be counted up but without the constant component of said total compound signal.

8. The method of claim 4, wherein if said conjunction is present that accompanies changes to be carried out so as to maintain the required thermal comfort and also the condition of said average interior air temperature value to be higher than the minimum permissible value as actually being set is satisfied, the kelvin-hours are counted up respectively, whereas in case of said service adjustments of the central heating equipment accompanied by operations of valve closing and the possible simultaneous opening of windows and/or doors of the apartment or similar accommodation and the said operations cause various changes of interior air temperature dynamics, then if there is a small dynamics of temperature decrease and a small temperature drop of the actual average temperature absolute value and also the said conditino pertaining to the whole value of average interior air temperature is satisfied, the kelvin-hours are counted up, but if there is a high dynamics of temperature drop and a high temperature drop of the actual average interior air temperature absolute value similar to that of ventilation state, then the counting-up of kelvin-hours is referred to the said total compound signal as for said ventilation state.

9. The method of claim 4, wherein said conjunction is present that accompanies the situation as created by an interruption of heat flux from central heating radiators and then the conditions arising out of it cause the interrupt signal to operate and stop the counting of kelvin-hours if the condition of lower average interior air temperature value than the minimum permissible one as actually set up is satisfied, the period of count interruption lasting until the value of average interior air temperature reaches the value higher than the actually set up again, and besides the average temperature of heating medium return from radiator outlets is higher than its minimum permissible value as actually set up.

10. The method of claim 4, wherein the physical states and thermal conditions of an apartment or accommodation are separately indicated with reference to said characteristic conjunctions of the measuring quantity values, actually valid condition of the minimum average interior air temperature value and the minimum and maximum average temperature values of heating medium return from radiator outlets, and in addition to that an actual average value of the interior air temperature value is read in kelvins as it is separately and simultaneously counted up and digitally displayed in kelvin-hours.

11. The method of claim 4, wherein during the decrease of said average temperature value of heating medium return from radiator outlets if it becomes lower than the minimum temperature as set up and if the said average value of interior air temperature is higher than its minimum permissible one as actually set up, the counting of kelvin-hours is interrupted if the two conditions are present at the same time.

12. The method of any one of the preceding claims, wherein said operating measuring, switching, control and counting functions are performed depending on the environmental thermal state as actually being created due to the operation of central heating radiators, the counting of kelvin-hours being superodinately and automatically stopped if said average value of interior air temperature is lower than the value assumed as the condition of receiving the required electric power from a thermoelectric source of the electric power and if the temperature of heating medium return from radiators as well as the actual interior air temperature have their average values lower than their set values.

13. Method of claim 12, wherein the required electric power is taken from a miniature battery to be individually provided in each apartment multifunction measuring unit.

14. The method of claim 12, wherein the required electric power for the apartment multifunction units is taken from a separate central electric installation in the building, and all the apartment meters will interrupt their counting of heat quantities, superordinately and automatically, if the heating medium temperature in the heat exchange centre or the boiler of central heating system does not satisfy requirements of valid standard and the agreement for heat delivery.

15. The method of claim 12, wherein instead of the interior air temperature and the heating medium temperature of return from heating radiators, the former being a counted up quantity and the latter being a control quantity, temperature measurements are performed for each radiator or for each independent pipe branch from a riser of central heating system on supplying inlet and return outlet of the heating medium so as to obtain the differential value of temperatures, and the volumetric heating medium flow is measured, and then the obtained analog signals are sent to said apartment multifunction measuring unit from sensors so as to convert them and obtain the final measuring result in legal thermal energy units after the consecutive signal processing at processing states and calculations, and display the heat quantity as received from the apartment heating radiators.

16. The method of claim 15, wherein said thermal energy measuring function configured as an independent thermal energy meter to be employed in separate apartments or similar accommodations collects and converts analog output signal coming substantially from any number of thermometric sensors and any number of volumetric flow sensors that are installed substantially on any number of radiators of a central heating system, but if needed, the configuration of said thermal energy measuring function can still be employed as the basis to determine said portions of heat quantities so as to settle up the accounts for the received heat quantities with reference to the superordinated role of the total heat quantity as measured for the whole building and displayed by the main reference multifunction measuring unit of the building, and to use the said correction factors as calculated for each separate apartment, respectively.

17. The method according to any one of the preceding claims, wherein the reference measurements of energy media and water for said whole building are performed by means of a functionally integrated legalized multifunction measuring unit, each kind of its measuring function, directly or indirectly, corresponding to or representing relative measuring function of said apartment multifunction measuring unit, whereas the sensors are to be used for the same kind as for the apartment multifunction measuring unit although they have larger measuring ranges and geometric dimensions resulting from the measurements of the total quantity of the medium as received by the whole apartment building or similar house.

18. The method of claim 17, wherein the thermal energy function of said main reference functionally integrated multifunction measuring unit collects, processes and calculates the analog signals received from thermometric sensors and volumetric flow sensors so as to perform the measuring tasks including the direct measurement of the total heat quantity as received from the municipal heat distribution network for the equipment of heat exchange centre of the building, the direct measurement of the total heat quantity as received by the heat exchanger of building central heating system and the calculation of a difference of those two measured heat quantities in real time so as to obtain the heat quantity as used for that part of said heat exchange centre equipment that is designed for heating up cold water to the normal temperature level as required for warm water, but if there additionally are other heat receivers within the heat exchange centre, for example separately employed for air heating up of ventilation or air conditioning systems, then said receivers will have a separate set of measuring sensors to be connected to the main reference functionally integrated measuring unit of the apartment building so as to adequately calculate that heat quantity in order to determine said difference of those two other measured heat quantities, the third heat quantity being also separately displayed on the unit digital display for heat readings adequately with reference to the heat quantity as contained within the warm water volume as received from the indoor warm water central system of the building.

19. The method of claim 17, wherein if there are no other heat receivers within the indoor building installation system, the heat quantity as employed for the heating up of cold water so as to obtain said required normal temperature of warm water, and the heat quantity as received by the central heating system of building are measured with three thermometric sensors and the two heating medium volumetric flow sensors only, this being related for example to the high pressure hot water taken from said municipal heat distribution network and flowing in pipelines of the heat exchange centre, the heat quantity as contained in warm water volume and the heat quantity taken from the heating medium to said central heating system in apartments are sseparately displayed.

20. The method of claim 4, wherein the number of thermometric sensors of said interior air temperature is employed as a constant component of said calculated correction factor of the apartment, the correction factor being used to determine the heat quantity as received in that apartment but it is based upon the measured number of kelvin-hours and referred to the total heat quantity as displayed on the heat indicating display of said main reference multifunction measuring unit for the total heat quantity as received from the heat exchanger of the building central heating system.

21. The method of claim 4, wherein the interior air temperature is separately measured with any one thermometric sensor, the total compound signal of said intense counting up of kelvin-hours during said ventilation state so as to also measure the higher thermal losses is being switched on or switched off when the ventilation state is detected by at least one of said sensors or when such a sensor detects the end of ventilation, respectively.

22. The method of claim 4, wherein the number of kelvin-hours with reference to the actual changes of interior air temperature are counted up when said changes represent a situation of thermal losses in said thermal stationary state and if said thermal losses cause a lasting steady state drop of said interior air temperature, the temperature drop having relatively small value but lasting rather for a long time, both said aspects being respectively small and long enough so that the small temperature drop be lower than a certain set value, whereas the time interval of said temperature drop duration be longer than the time interval within which the dynamic function for detecting the start of ventilation and then to switch the total compound signal on so as to start intense counting up of kelvin-hours to able to form said signal according to the thermal energy measuring function of the apartment measuring unit when the ventilation state exists in the apartment.

23. The method of claim 22, wherein the stationary state of interior air temperature values is monitored in real time and by periodically repeated measurements, for example every one hour, and within said repeated measuring period the circuit of heat measuring function stores the temperature value as being detected at the end of preceding measuring period, whereas the next measured temperature values that follow afterwards are compared to the stored temperature value so as to independently switch the total compound signal on if the static temperature drop is detected and identified or switch it off if there is not any further said drop, or an increase of said temperature value and the temperature value are detected to be higher than the set temperature value.

24. The method of claim 22 or 23, wherein the producing or ceasing of the total compound signal depends only and exclusively on the heat loss within the apartment or similar accommodation being small enough and such that there is a change of interior air temperature lower than the temperature value as set with reference to the situation of said static thermal loss, and besides it causes the function of switching the total compound signal to operate any number of times and according to times and instants when the set temperature value is exceeded and the set repetition time of measurements is exceeded.

25. The method of any one of the preceding claims, wherein the volumetric flow of said high pressure hot water , indoor installation warm water and cold water is measured with a flow sensor, for example of ultrasonic or magnetic type, the volumetric flow of natural gas is measured with a gas flow sensor so as to include substantially constant gas pressure as maintained by means of a gas regulator or a correction from gas pressure value as actually measured in real time and processed within the calculating circuit of said apartment or said main reference multifunction measuring units in order to obtain gas volume expressed in standard cubic metres, whereas the electric energy is measured, for example with a single-phase or three-phase analog electric power converter to electric voltage signal, the output signals of measuring sensors changing within a standard range and their actual values are measured and represented by analog and digital signals, separately being discriminated in respect to each measured physical factor and independent of the remaining measured physical factors, in real time.

26. The method of claim 25, wherein a separate central electric wiring system within the building is jointly used for an electric power supply of the apartment multifunction measuring units and the transmission of data measuring signals by means of separate cable cores from said units to a central computer that collects and processes the measuring data and performscalculations according to a computing program as well as prints bills, the calculations also including the legalized measuring results as received from said main reference multifunction measuring unit of the whole apartment building as well as the updated constant empirical data that are the components of said calculated correction factors.

27. The method of claim 26, wherein the said computer operates within a local area network but can render services to either only one apartment building or a group of apartment buildings with a proper division,with reference to each building.

28. The method of claim 25 or 26, wherein said measuring signal transmission is carried out through an indoor or outdoor telephone system.

29. The method of any one of the preceding claims, wherein said building and said apartment multifunction measuring units are pro vided with a real-time simulation so as to monitor the operation of all the processing stages of signals by means of a standard signal to be supplied to the input of said units and the final response to checked by a comparator circuit and monitor indicator at the output of calculated quantities.

30. The method of claim 17, wherein said measuring functions are employed each one separately and then the measuring multifunction unit operates as either single-function or multi-function unit.

31. The method of claim 17, wherein the liquid or gas medium is measured with an ultrasonic sensor of flow velocity including piezoelectric converters so as to calculate the volumetric flow of gas fuel and volumetric flow of water.

32. The method of claim 25, wherein the electric energy quantity is measured by means of an analog or digital electric power converter so as to obtain a voltage measuring signal, respectively.

33. The method of claim 1 or 2, wherein the main reference water meter measures the total volume of water as taken by the building water receiving system from the municipal water supply system and the main reference heat quantity meter measures the total heat as received from said heat exchanger or similar heat source and used for the heating up of cold water so as to prepare the warm water, the said meters are legalized measuring units, and then the warm water and the cold water are measured by means of apartment water meters provided with their thermometric function, each apartment water meter taking measurements of water volumes and heat quantities as contained within the warm water volumes that are utilized in a given apartment and water meters being subordinated relative to said main reference meters but representing their measuring functions with reference to the heat quantity and the water volume as actually received in each apartment separately, whereas the apartment water meters give readings of heat quantity and the total cold and warm water volume shown on their digital displays so as to calculate said dimensionless correction factors as based on the said readings within periods of inspection as agreed upon, the calculated product of said correction factor and the displayed value of the total received quantity of measured medium for the whole building being the actual value of that measured medium, that is the heat quantity in warm water volume or the volume of cold and warm water jointly as utilized in the apartment, whereas the measurements of heat and water volume are performed with thermometric sensors and the water flow sensors to be installed at pipeline branches from the indoor warm water and cold water systems, the sensors sending their analog signals to the input of the apartment water meter which converts the signals into digital signals and counts them up.

34. The method of claim 33, wherein each heat quantity as contained in warm water and each total cold and warm water volume as received in the apartment are by way of calculations referred to said superordinated legalized value as being counted up within the same period of inspection and said main thermal energy meter and said main water meter,respectively,while also the systematic, accidental and gross errors are eliminated due to the calculating operation and said correction factor, the correction factor being determined with reference to the readings from the apartment water meters and calculated as a quotient where the reading value of one apartment water meter is divided by the total of reading values from the same kind of measuring function digital displays in all other apartments of the building.

35. The method of claim 33 or 34, wherein the heat quantity as contained in said warm water is separately measured and summed up and also separately, said warm water volume is measured and summed up, the warm water volume being added within the apartment water meter system to the measured cold water volume, whereas the apart ment water meter gives separate readings for heat quantity and separate readings for the total of cold and warm water volumes.

36. The method of claim 33,34 or 35, wherein the minimum set value as the permissible temperature is determined for said warm water according to respective warm water delivery agreement, the set value being used for switching the thermometric circuit of said apartment water meter if the actual warm water temperature becomes either higher or lower than the set value and then the heat quantity is counted up either according to a higher rate or lower rate, respectively, so as to determine payments due for the heat delivered to the apartment in said warm water volume.

37. The method of claim 33,34,35 or 36, wherein the actual warm water temperature value is continuously measured with one thermometric sensor at each one warm water pipeline branch of the apartment warm water supply system, whereas the measured value is referred to the actually measured cold water temperature within the apartment, but the cold water temperature is measured only at one arbitrarily selected cold water branch within the apartment and with one thermometric sensor only, and the differential values of warm water temperature and cold water temperature are measured and counted up at the same time as the respective warm water volumes are taken from any one warm water pipeline branch of the apartment warm water system, the warm water heat counting up is carried out until,at least, one warm water fitting gives off a measurable warm water volume in the apartment, the counting-up operation being ensured within the water meter circuits by means of AND-gating operations with reference to said differential temperature value and discrete warm water volumes.

38. The method of claim 33,34,35,36 or 37, wherein the actual measured warm water temperature value is referred to a constant set value assumed in the thermometric circuits of said apartment water meter to be an average cold water temperature.

39. The method of claim 33,34,35,36,37 or 38, wherein one water meter with its thermometric function performs all the required measurements within one apartment by means of any number of measuring sensors as being necessary depending on the actual layout of the apartment warm water and cold water systems as well as the apartment size and water fittings.

40. A multifunction measuring unit for the application of the method according to any one of preceding claims comprising: analog signal switching circuit /10a/, only one analog-to-digital converter /10/ and digital signal switching stage /10b/, connections of measuring analog signals having standard ranges of values substantially from any number of measuring sensors to analog signal switching stage /10a/, each sensor having substantially different measuring function depending on the kind of measured medium, its actual absolute value or quantity.

41. The unit as in claim 40, which there is a self-checking monitoring system /9,9a,9b/, said monitoring system including transmitter /9/ connected to the input of switching stage /10a/, buffer /9a/ connected to the output of switching stage /10b/ and receiving circuit /9b/ that is connected to the output of switching stage /46/ for selecting the kind of display, circuit /9b/ having a comparator circuit with reference signal and an indicator of normal or defective operation.

42. The unit as in claim 40 or 41 in which there are digital buffer /12,13,14,15,16,17,18,19,20,21,9a/ and the buffers have connections to the output of switching stage /10b/, the buffer inputs being connected to measuring sensors with analog output signals and being controlled by a timing clock, and besides there is a system /10a,10,10b/ that forms a signal transmission means so as to convert analog signals to digital signals to selectively be directed to corresponding buffers, the number of measuring sensors substantially correponding to the number of digital buffers that have outputs including connections to the input of switching stage /44/ provided with a function of switching the kind of measurements, the connections being either indirect ones /12,13,14,15,16/ or direct ones /17,20,21,9a/, the former including converting and calculating circuits that operate with reference to the set values as being set up by adjusting means /24a,26a,27a,28a,31a,37a,43a/, and besides the collected, processed and calculated measured quantities are provided with a data transmission means including switching stage /44/, calculating and totalizing circuit /45/, said switching stage /46/ for selecting the kind of display so as to connect to the corresponding inputs of digital displays /39,47,48,49,50,51/ and give readings, for example kelvin-hours, heat quantity, water volume in cubic meters or gas volume in standard cubic meters.

43. The unit as in claim 40,41 or 42 in which the heat measuring function includes buffer group /12,13,14/, indirect connections and operational circuits /22,23,24,25,26,27,28,29,35,36,37,38,40,41,42,43,25a/, gating circuits /22,28/, storing circuits /35,41/, subtracting circuits /29,23/ of temperature measuring signals, summing up circuits /36,42/ of temperature measuring signals, comparator circuits /24,26,27,37,43/ of the actually measured value and the set value, multiplying signal circuits /40/, control switching circuits /25,25a/, adjusting means /24a,26a,27a,28a,37b,43a/ and signalling means /11,25b,37a/ for displaying operational states 44. The unit as in claim 40,41 or 42 in which the water measuring function includes buffer group /14,15,16,17,19/ indirect connections and operational circuits /30,31,32,33,34/, circuit /30/ being used for the switching of measurements with reference to a water volume at temperature to be higher than its minimum set value and circuit /33/ with reference to a water volume at temperature to be lower than its minimum set value, comparator circuits /31/ comparing the actually measured temperature and the set value, comparator circuits /32/ comparing the actually measured temperature values of warm water and cold water and adjustin means /31a/ of the minimum temperature value.

45. The unit as in claim 42 or 43 in which the heat measuring function includes static heat loss identification and measurement circuits /28,29,41,42,43/ for detecting and counting up heat losses during the stationary states within the apartment and dynamic heat loss identification and measurement circuits /25a,25,26,27,35,36,37,22,23/ for detecting and counting up heat losses during the ventilation states within the apartment, the identification operation of either the static heat loss or the dynamic heat loss causes a measuring signal to be switched on, the measuring signal representing the changes of interior air temperature values within an apartment or similar accommodation in real time and comprising an additional aperiodic component with reference to the aperiodically changing negative increase of the actual interior air temperature, and besides includes one or more interior air temperature sensors and memory circuits /35,41/ so as to store the temperature value being prior to the instant of the heat loss, the stored temperature value being employed as a constant component together with said aperiodic component and jointly form a total compound measuring signal, and includes summing up and calculating circuit /45/, switching stage /44/ and switching stage /46/ as well as digital display /39/ so as to give the actual reading with reference to the said total compound measuring signal.

46. The unit as in 42,43 or 45 in which said heat measuring function includes adjusting means /24a/ so as to set up the minimum interior air temperature, adjusting means /26a/ so as to set up the minimum temperature of water return from heating radiators, adjusting means /27a/ so as to set up the maximum temperature of of water return from heating radiators, adjusting means /28a/ so as to set up the timing of periodically open gate /28/, adjusting means /43a/ so as to set up the differential value of static changes of interior air temperature and adjusting means /37b/ so as to set up the minimum value of dynamic changes of interior air temperature at the situation of ventilation, and besides includes visible indicators /37a/ of red colour to be switched on if there is said total compound signal, visible indicators /25b/ of green colour to be switched on when the normal counting up kelvin-hours takes place with no said total compound signal, and also includes control and switching signals, the output signal of circuit /43/ connecting to the controlling input of circuit /42/ and to the negated input of OR-gate and the output signal of circuit /37/ connecting to the control input of circuits /36,25a,38/ and to the negated second input of OR-gate, whereas the output of OR-gate connecting to the controlling input of circuit /25/.

47. The unit as in claim 42,43 or 44 in which said water meter function includes adjusting means /31a/ so as to set up the minimum permissible value of said warm water temperature and controlling and switching signals, the output signal of circuit /31/ connecting to the input of circuit /30/ and the input of circuit /32/, both inputs being of the control kind and that of circuit /32/ being a negated input, and includes the connection between the output signal of circuit /32/ and the control input of circuit /33/, the latter to switch on water volume measurements if its temperature is lower than the minimum set value of warm water temperature as being set up by adjusting means /31a/.

48. The unit as in any one claim from 40 to 47 in which including summing up and calculating circuit 45/ that has connections to switching stages /44,46/, and besides including kelvin-hour display /39/, total cold and warm water volume display /49/, heat quantity in warm water displays /47,48/, gas volume display /50/ and electric energy display /51/, and also has self-checking monitoring circuits /9,9a,9b/ provided with visible signalling so as to indicate a normal or defective operational state of measuring system, the circuit /9b/ including a reference standard for simulation.

49. The unit as in claim 48, in which is interface system /52/ and measuring data output with connection to data transmission line of local computer network.

50. The unit as in any one claim from 40 to 49 in which there is a connection to an adherent thermometric sensor on the supplying inlet of central heating radiator and on water return outlet of said radiator, respectively, and besides there is connection to a water flow sensor that is in a pipeline branch of parallelly connected radiators or at each radiator on its water return outlet, and also there is a signal from said differential temperature value and a signal from the volumetric heating water flow, and besides there is a multiplying circuit so as to multiply one signal by the other, the multiplying circuit including connections to heat quantity digital display so as to give readings with reference to the signal product value to be calibrated in the valid thermal energy units.

51. A modification of the multifunction measuring unit for the application of the method according to any one of preceding claims from 1 to 39 in which are included : analog signal switching circuit /60a/ only one analog-to-digital converter /60/ and digital signal switching stage /60b/, and also includes connects to substantially any number of required measuring sensors, but in particular there are no more said measuring sensors than two sensors /53/ of volumetric high pressure hot water flow taken from said municipal heat distribution network, one sensor being placed in return pipeline from heat exchange centre and the other in return pipeline from the heat exchanger of central heating system, and there are no more said measuring sensors than three thermometric sensors /54/, one sensor being placed on the supplying pipeline of heat exchange centre from said municipal heat distribution network, second one on return pipeline from heat exchange centre to said municipal heat distribution network and third one on return pipeline from the heat exchanger of central heating system, and besides includes connections to volumetric cold water flow measuring sensor in the pipeline that connects to said municipal water-pipe network /55/, gas fuel sensor /56/ of volumetric gas flow to be placed adjacent behind the gas regulator in the building gas terminal, as well as to measuring sensor /57/ of the actual gas pressure value, the output signal of said sensor /57/ being for the connection of gas volumetric measurement so as to obtain gas volume readings in standard cubic metres of the legalized measuring results, and includes the connection to an analog three-phase electric power measuring sensor /58/, and besides is provided with a built-in transmitter /59/ of a self-checking simulating system /59a,59b,59c,59d,59e/ so as to simulate the actual operational state of measuring system, as well as includes substantially any required number of digital buffers / 61,62,63,63a,64,65,66,59a/ with outputs connected to summing-up and multiplying device /67/ with a selective choice of digital signal inputs, and has adjusting means, for example to set up the value of normal pressure of gas fuel, device /67/ having a connection to the input of switching stage /68/ of the calculated quantities and the latter includes connections of its outputs to the inputs of digital displays /69,70,71,72/ which are doubled, that is each kind of display is made of two parallelly operating reading devices, one being a liquid crystal digital display and the other being an electromechanical counting device, the electromechanical one having the role of a permanent memory, whereas display /69/ is a reading assembly with so many counting mechanisms as necessary with reference to the number of independent heat quantity displays.

52. The modification as in claim 51 in which there is interface system /73/ for measuring data transmission, including a connection to a computer network.

53. A housing of the multifunction measuring unit according to claims from 40 to 50 comprising: front panel with a division into sections /S1,S2,S3,S4/, one section /S1/ including liquid crystal displays with counting functions and liquid crystal display for indicating the actual temperature value, light emitting diodes of various colours, second section /S2/ including electromechanical counting devices and third section /S3/ including adjusting means, and also fourth section /S4/ is a spare space.

54. The housing of claim 53 in which there is a connection including multi-point socket and compatible multi-point plug for an external multicore cable and being configured as exchangeable module that can be substituted for any other such module.

55. A modification of the multifunction measuring unit according to claims from 40 to 50, reduced to a single-function configuration that includes the heat measuring function only, comprising: thermometric and calculating circuits /79,80/ for counting of kelvin-hours, thermometric circuit /79/ including connections to thermometric sensors, for example of thermistor type, so as to measure temperature of heating medium return from central heating radiator outlets and the operation of thermometric sensor /79/ being based upon the dynamic changes of analog signals with reference to the flow chart of operations and conditions that determine the counting up or counting interruption of kelvin-hours.

25

56. The modification of claim 55 in which there is a signal that represents changes of average interior air temperature in an apartment or similar accommodation, the signal being converted into kelvin-hours by a counting operation to be performed in a group of circuits, and there is a signal that represents changes of average temperature of heating medium return from said radiator outlets, the signal causing switching and calculating circuit /80/ to switch on and count up the kelvin-hours of the average interior air temperature or to stop and interrupt counting which depends on the actual presence of characteristic conjunctions of values and dynamic features of both analog signals, the signals being received from thermometric sensors, and depends on the absolute values of temperature level to be counted up as kelvin-hours and temperature level to be employed for the control function of kelvin-hour counting.

57. The modification of claim 55 or 56 in which if there is a decrease of average interior air temperature with a high dynamics but said average temperature heating medium return from radiators is higher than its set value determined in measuring and calculating circuits /79,80/ and substantially being constant,that being dependent on the thermometric sensor zone of insensitivity to be provided by the sensor design, the thermometric sensors representing said temperature of heating medium return, then the analog signal to be converted into kelvin-hours includes a constant component from an instant, since which the above mentioned physical state starts up, and includes a positive aperiodically changing component that represents the aperiodically changing negative increase, that is an actual decrease, of said average interior air temperature and such a total compound signal is converted into kelvin-hours and counted up till a next instant, at which thermometric circuit /79/ detects a decay of said dynamics of the average interior temperature decrease in an apartment or similar accommodation and after that decay also detects a positive increase of said average value of interior air temperature, but if the actual temperature dynamics shows the required linear steepness as being high enough, and said constant component of the total compound signal is then being removed by circuits /79,80/, whereas said positively changing aperiodic component of the total compound signal ceases to further be a differential temperature value and since then it represents the actual full value of said measured average interior air temperature as the analog signal full value actually received from thermometric sensors , and counted up after being converted into kelvin-hours if the relevant conditioned switching operations are made.

58. The modification of claim 55,56 or 57 in which increasing or decreasing of said analog signals as caused by the change of average interior air temperature advances relative to time, in circuits /79,80/, the respective change of said average analog signal value coming from the change of the average temperature of heating medium return from radiators , that condition of signal value advance being relevantly modified with reference to physical properties of the thermometric sensor design and depending on corresponding ratios of insensitivity thresholds of the thermometric sensors in respect to said thermal states in interior /78/ of an apartment or accommodation.

59. The modification of claim 55 in which there is display /87/ of said average interior air temperature in kelvins, display /105/ of the same temperature as indicated by display /87/ but shown in kelvin-hours, display /105/ being an electronic counting device that also is coupled in parallel to an electromechanical counting device so as to count up the same counting signals at the same time.

60. The modification of claim 59 in which green display /104/ is for indicating the normal thermal insulation of interior /78/ at which kelvin-hours are counted up and red display /96/ is for indicating the decreased level of thermal insulation in interior /78/ at which said kelvin-hours are counted up, for example , that being caused by opening windows /77/.

61. The modification of claim 55,56,57,58 or 60 in which there are adjusting means for setting up the minimum permissible average value of interior air temperature, the maximum and minimum average temperature of heating medium return from radiators and the minimum dynamics value of the changes of said average interior air temperature.

62. The modification of claim 55 in which there is circuit /108/ that checks if the signal which represents said changes of average interior air temperature in an apartment or accommodation shows up a negative dynamics or positive dynamics.

63. The modification of claim 55 in which there is circuit /109/ that stores the signal value which represents an instantaneous value of said average interior air temperature being prior to the instant when the dynamics of said temperature decrease has exceeded its absolute minimum value as actually set up by adjusting means /94/ in circuit /92/ which compares if calculated difference of the average interior air temperature values exceeds the minimum set value of changes of dynamics.

64. The modification of claim 55 in which signal changes coming from the changes of said average temperature of heating medium return from radiators, the signal changes having the role of controlling the measurements and the counting of kelvin-hours as well as being present in transient states at that time, have their absolute values lower than the maximum value which at transient states is lower than the threshold value of measuring sensitivity of thermometric circuit /79/, the circuit /79/ reacting to the mean absolute value of control signals at thermal steady state.

65. A modification of the multifunction measuring unit according to claims for 40 to 50, reduced to a single-function configuration that includes the water meter function with thermometric circuits only for measurements of cold and warm water volume and warm water heat contents, comprising: circuits of water meter function and circuits of thermometric function, the circuits including connections to sensors of volumetric cold and warm water flow and to thermometric sensors of water temperature, and output analog signals of sensors being converted into digital signals by means of one only analog-to-digital converter irrespective of the number of sensors as actually permanently connected to the system, and separate display or displays of heat quantity and one common display of the total volume of warm and cold water.

66. The modification of claim 65 in which there is a digital signal that provides the control function including enabling-disabling control operation that simultaneously either enables the counting up of said warm water heat quantity by means of circuit /123/ if warm water temperature is higher than its minimum set value and disables the operation of circuit /125/ which otherwise counts up the warm water heat quantities if the warm water temperature is lower than its minimum set value or, also simultaneously, inverts the enabling-disabling action when the situation becomes the opposite one and said warm water temperature is becoming lower than its minimum set value and then circuit /125/ is enabled and circuit /123/ is disabled.

67. The modification of claim 65 or 66 in which measuring signals are quantized in real time, the quantized values determining heat quantities in warm water as well as the volume of warm and cold water.

68. The modification of claim 65,66 or 67 in which a self-checking monitoring function includes circuit /131/ that provides a stan dard analog signal for voltage level simulation of signals from sensors and comparator /132/ and /133/, the comparators checking the correctness of responses to the standard signal, and there is a visible signalling of incorrect states.

69. The modification of claim 65,66,67 or 68 in which adjusting means /121/ are for setting up the minimum set value of warm water temperature in circuit /122/, circuit /122/ having output signal that performs said enabling-disabling operation for circuits/123,125/.

70. The modification of claim 69 in which adjusting means are for the setting up the average set value of cold water.

71. The modification of claim 65,66,67,68 or 69 in which circuit /127/ is for multiplying and totalizing operations, the circuit /127/ receiving digital signals from buffers/ 117,118/ and alternately receiving digital signals from circuits /123,124/ as well as sending its counting-up signals to digital display /128/ and digital display /129/ and besides to comparator /132/ that checks the correctness of responses to said standard signal.

72. The modification of claim from 65 to 71 in which circuit /126/ for totalizing digital signals coming from buffers /119,120/, circuit /126/ sending its counting-up signals to digital display /130/ and to comparator /133/ that checks the correctness of responses to said standard signal.

73. The modification of claim from 65 to 72 in which there is an individual power supply from a direct or alternating current source with a proper reserve and protected against any tampering that could lead to any supply interruptions.

74. The modification of claim 65 to 74 in which power supply is from a separate central electric wiring system within the building including connections to main direct or alternating current source with a proper reserve and protection against tampering.

27

EP 0 328 885 A2

Fig. 1

Fig. 2

Fig. 3

Fig. 4

Fig. 5

Fig.6

Fig. 7

Fig. 8

Fig.9

Legend

Fig.5:  $1^0 = -A \wedge -B \wedge (\theta_{go} > \theta_g)$

$2^0 = -A \wedge -B \wedge (\theta_{go} < \theta_g)$

$3^0 = +A \wedge B=0 \wedge (\theta_{go} < \theta_g)$

$4^0 = -A \wedge B=0 \wedge (\theta_{go} < \theta_g)$

$5^0 = -A \wedge B=0 \wedge (\theta_{go} < \theta_g)$

$6^0 = A=0 \wedge B=0 \wedge (\theta_{go} < \theta_g)$

$7^0 = \theta_i < \theta_{io}$

$8^0 = -A_m < -A \leqslant 0$

$9^0 = (-1) \cdot (-A) + \theta_i; \quad \theta_i = \text{const.}; \quad t_1 \leqslant t \leqslant t_2$

$10^0 = \text{no count}$

$11^0 = \text{interrupt}$

$12^0 = \theta_i > \theta_{io}$

$13^0 = \theta_g > \theta_{gx}$

$14^0 = \text{count}$

T = YES          N = NO